(19) **Europäisches Patentamt**
**European Patent Office**
**Office européen des brevets**

(11) **EP 4 042 395 B1**

(12) **FASCICULE DE BREVET EUROPEEN**

(45) Date de publication et mention
de la délivrance du brevet:
**03.07.2024 Bulletin 2024/27**

(21) Numéro de dépôt: **20776065.3**

(22) Date de dépôt: **02.10.2020**

(51) Classification Internationale des Brevets (IPC):
**G08B 7/06** (2006.01)  **G08B 29/18** (2006.01)

(52) Classification Coopérative des Brevets (CPC):
**G08B 7/062; G01C 21/206; G01C 21/3407;**
**G06V 20/52; G08B 7/066; G08B 29/186;**
G06F 18/2323; G06Q 90/205

(86) Numéro de dépôt international:
**PCT/EP2020/077750**

(87) Numéro de publication internationale:
**WO 2021/064225 (08.04.2021 Gazette 2021/14)**

(54) **PROCEDE ET DISPOSITIF DE GUIDAGE PAR OBJET CONNECTE DANS UN BATIMENT**

STEUERUNGSVERFAHREN UND -VORRICHTUNG ÜBER EIN VERBUNDENES OBJEKT IN EINEM GEBÄUDE

METHOD AND DEVICE FOR GUIDING BY CONNECTED OBJECT IN A BUILDING

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priorité: **02.10.2019 EP 19306270**

(43) Date de publication de la demande:
**17.08.2022 Bulletin 2022/33**

(73) Titulaires:
• **Université Paris-Est Créteil Val de Marne**
**94000 Créteil (FR)**
• **Université Gustave Eiffel**
**77420 Champs-sur-Marne (FR)**
• **Centre national de la recherche scientifique**
**75016 Paris (FR)**
• **Ecole Nationale des Ponts et Chaussées**
**77420 Champs-sur-Marne (FR)**

(72) Inventeurs:
• **RACHEDI, Abderrezak**
**77100 MEAUX (FR)**
• **MEBARKI, Ahmed**
**77454 MARNE LA VALLEE Cedex 2 (FR)**

(74) Mandataire: **A.P.I. Conseil**
**Immeuble Newton**
**4, rue Jules Ferry**
**64000 Pau (FR)**

(56) Documents cités:
**DE-A1-102011 083 023   US-B1- 9 898 912**

**Description**

**DOMAINE DE L'INVENTION**

La présente invention concerne un procédé de localisation d'utilisateurs, et de guidage, en fonction d'un évènement, dans un bâtiment, des déplacements des utilisateurs suivant des chemins menant vers un ou plusieurs lieux cibles donnés, le guidage étant adapté à chaque utilisateur.

**ETAT DE LA TECHNIQUE**

Face aux risques naturels et technologiques, la sécurité des personnes constitue un important enjeu : à titre d'exemple, cas des incendies pour le cas des IGH (immeubles de grande hauteur; par exemple, 2635 décès causés par les incendies aux USA en 2015) et des transports souterrains (métro).

Les modèles d'évacuation des foules sont largement abordés par la recherche.

Il est connu dans l'art la demande DE102011083023 qui concerne un système d'évacuation pour planifier des voies d'évacuation dans un bâtiment. Le brevet US9898912 concerne également un système d'évacuation.

Les simulations sont cependant orientées vers la partie pré-désastre pour dimensionner les chemins et les issues de sortie (emplacements, largeurs, etc..): cas du stade olympique de Pékin qui devait être évacué en 8 min en cas d'alerte.

Malgré la diversité des systèmes d'alerte actuels (systèmes sonores, systèmes d'affichage...), ces solutions ne sont pas toujours en mesure de fournir des instructions d'évacuation simples et efficaces (alerte en temps réel, itinéraire d'évacuation, mise à jour de l'itinéraire selon évènements en temps réel, etc.).

Les principales raisons de ces limites sont :

- un manque de flexibilité : les notifications d'évacuation suivent généralement des plans d'évacuation prédéfinis, peu importe le type et le degré de menace ou danger. Cela peut conduire les gens dans des impasses (plafonds effondrés, escaliers détruits, sorties bloquées, etc.) ou engendrer des problèmes plus graves (conduire à des espaces avec des fuites de gaz et des explosions possibles).
- un manque de « discernement » et une panique : en situation de danger, les personnes se précipitent vers les mêmes sorties, ce qui entraîne une congestion au niveau de ces dernières, et ainsi un retard considérable lors de l'évacuation outre les chocs et bousculades.
- des instructions et informations insuffisantes : pour les personnes qui ne sont pas familières avec le bâtiment, les instructions d'évacuation peuvent ne pas être utiles, voire inutiles.

Certaines catastrophes graves (panne de courant, incendie, etc.) qui réduisent la visibilité peuvent aggraver la situation.

Il s'agit alors de mettre en place une nouvelle stratégie de résolution de la problématique, en plaçant l'utilisateur comme point central, afin de lui offrir les informations nécessaires et pertinentes au moment opportun pour mieux réagir à l'incident.

**EXPOSE DE L'INVENTION**

L'invention utilise la tendance actuelle à l'usage des technologies de la communication, notamment l'Internet des objets et des maquettes digitales BIM qui ont suscité l'idée d'extraire les chemins possibles, pour l'évacuation dans le bâtiment notamment.

L'invention est définie par la revendication indépendante de procédé 1 et la revendication indépendante de dispositif 13.

L'événement peut avoir lieu en temps réel et peut créer des obstacles qui vont au cours du temps restreindre ou éventuellement augmenter le DAG (nombre de noeuds et d'arêtes), actualisé à une certaine fréquence ou en temps réel.

Par exemple, la «fonction objectif générale» permet d' optimiser les listes d'attente de l'ensemble des noeuds de passage (N), afin de limiter le temps ou la distance de parcours (qui sont dans ce cas les paramètres d'entrée) de l'ensemble des utilisateurs vers le ou les lieux cibles. A cet effet, pour assurer une évacuation totale en un temps optimal, un usager pourrait effectuer un long détour et être redirigé vers une porte plus lointaine que celle la plus proche qu'il aurait empruntée s'il avait été seul usager.

Ainsi, par exemple pour certaines applications, les paramètres d'entrée peuvent être considérés comme les paramètres d'écoulement des personnes dans le bâtiment

## DESCRIPTION DES FIGURES

D'autres objectifs, caractéristiques et avantages sortiront de la description détaillée qui suit en référence aux dessins donnés à titre illustratif et non limitatif parmi lesquels :

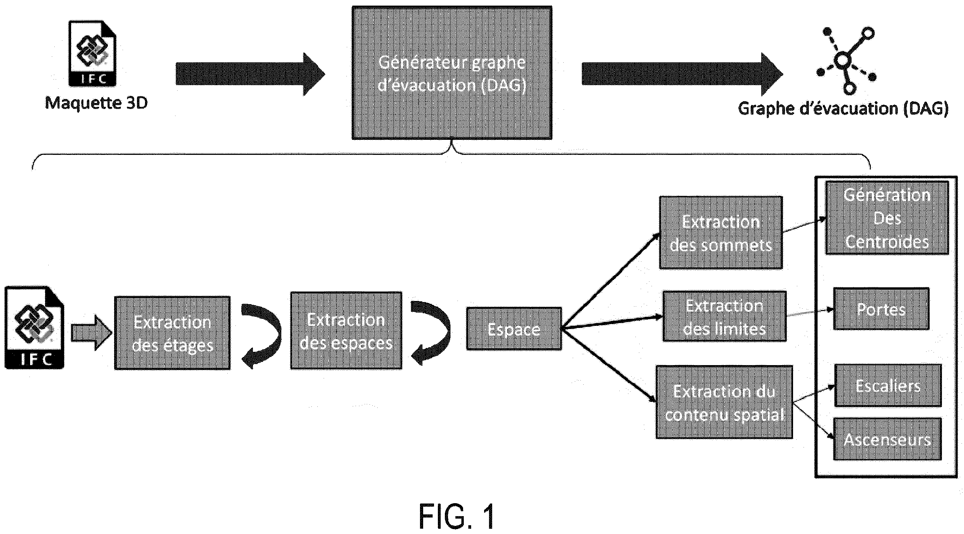

-   la figure 1 représente un processus de calcul du DAG à partir d'une maquette numérique BIM (par exemple avec les fichiers IFC en anglais « Industry Foundation Classe ») ;

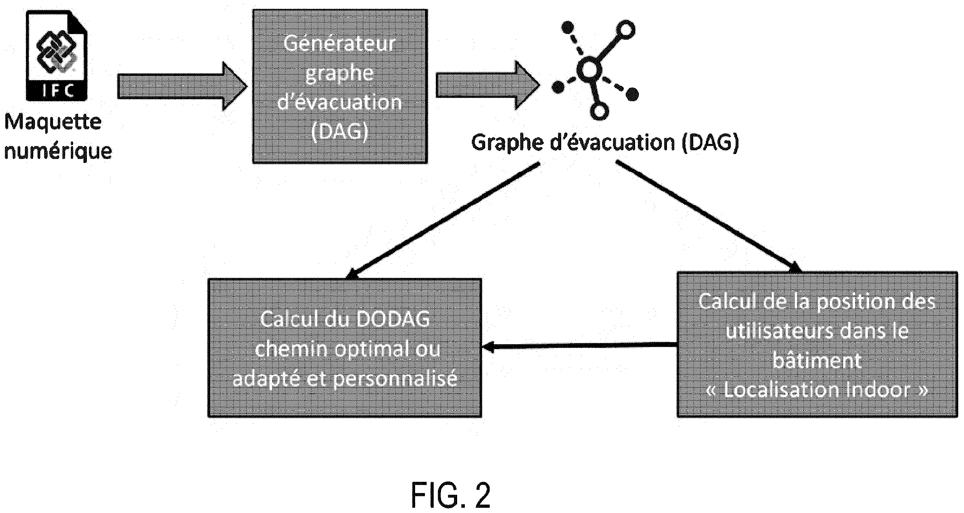

-   la figure 2 représente Interaction entre le processus de calcul du DAG et les processus de localisation et du calcul du DODAG' ;

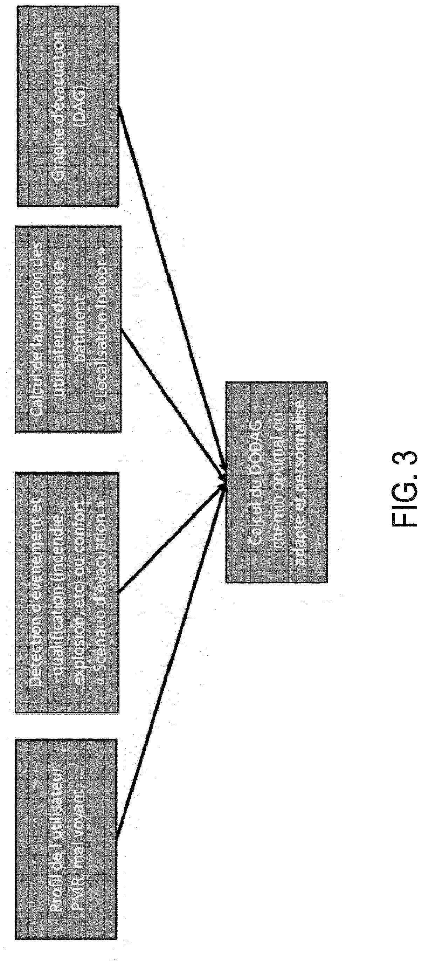

-   la figure 3 représente le processus de calcul du DODAG' (à vide), chemin optimal ou adapté et personnalisé ;

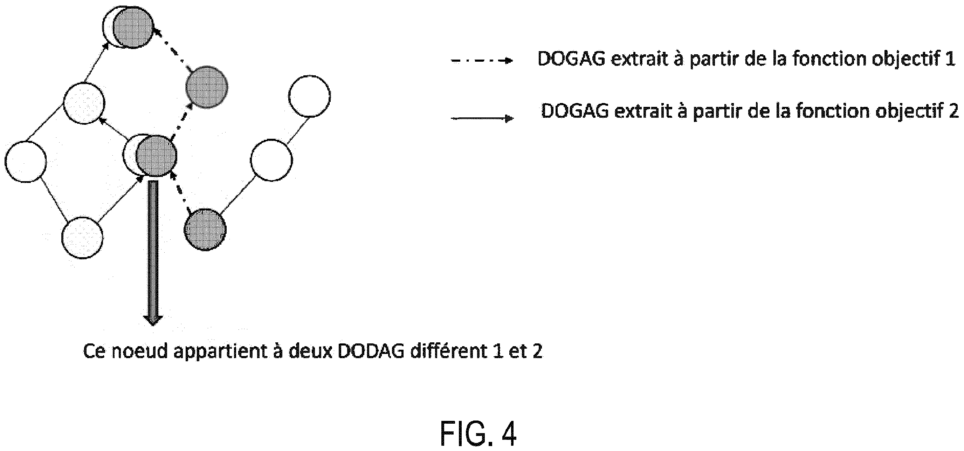

-   la figure 4 représente le calcul du DODAG' chemin optimal ou adapté et personnalisé une vue en coupe;

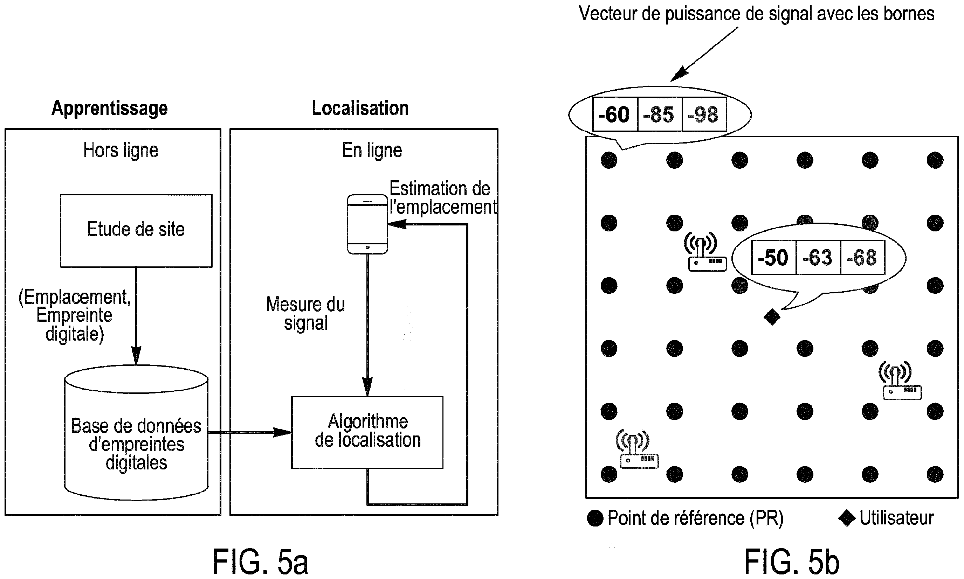

-   la figure 5 représente le processus de calcul de la position des utilisateurs dans le bâtiment, en anglais « Localisation Indoor » ;

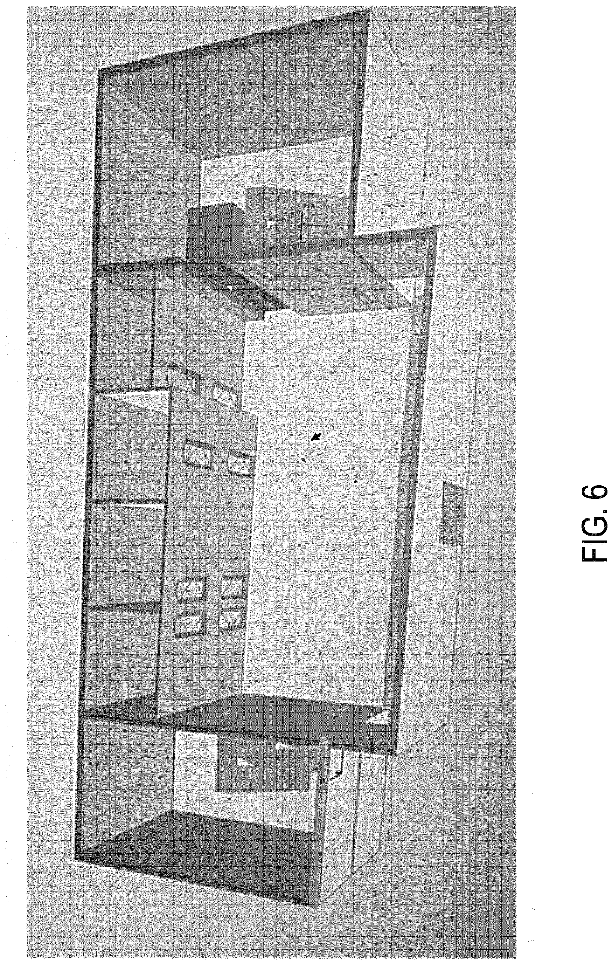

-   la figure 6 représente un exemple de réalisation de l'invention;

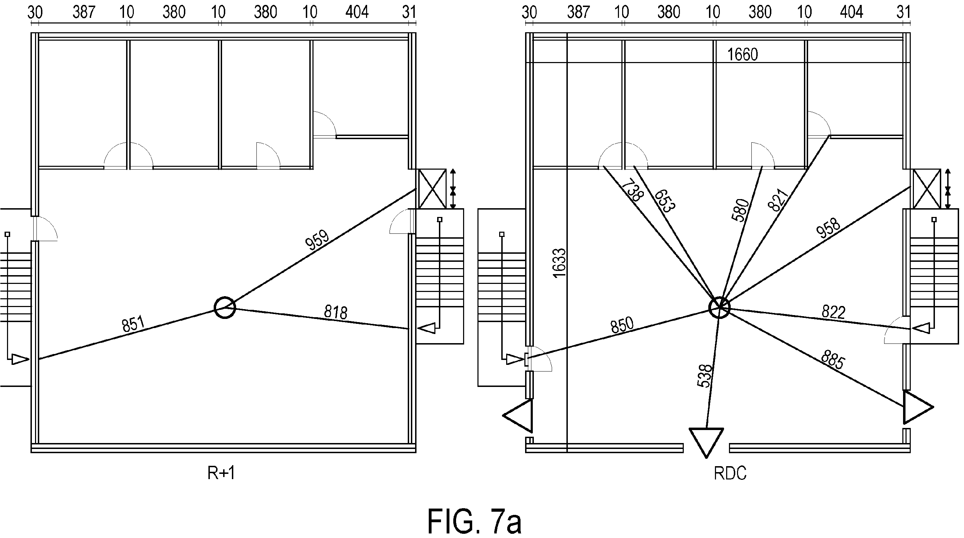

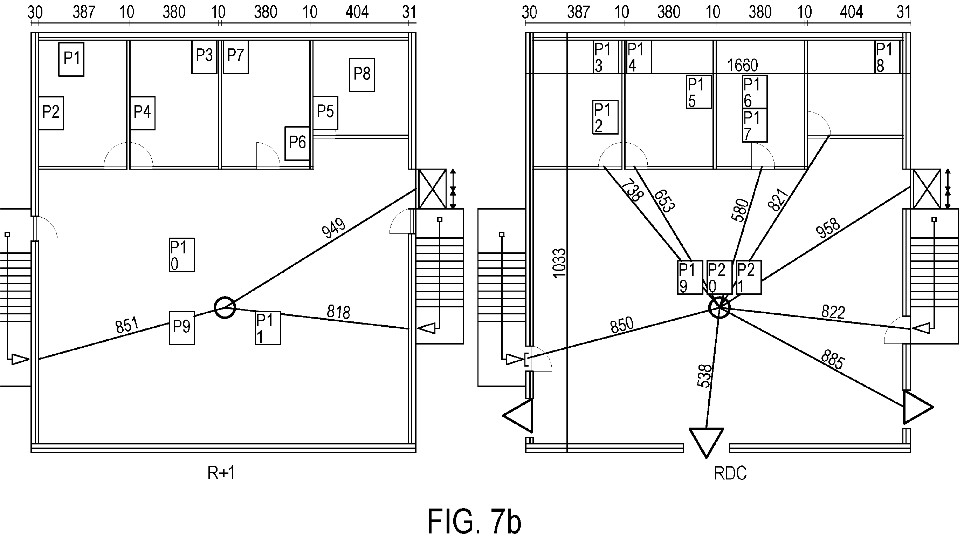

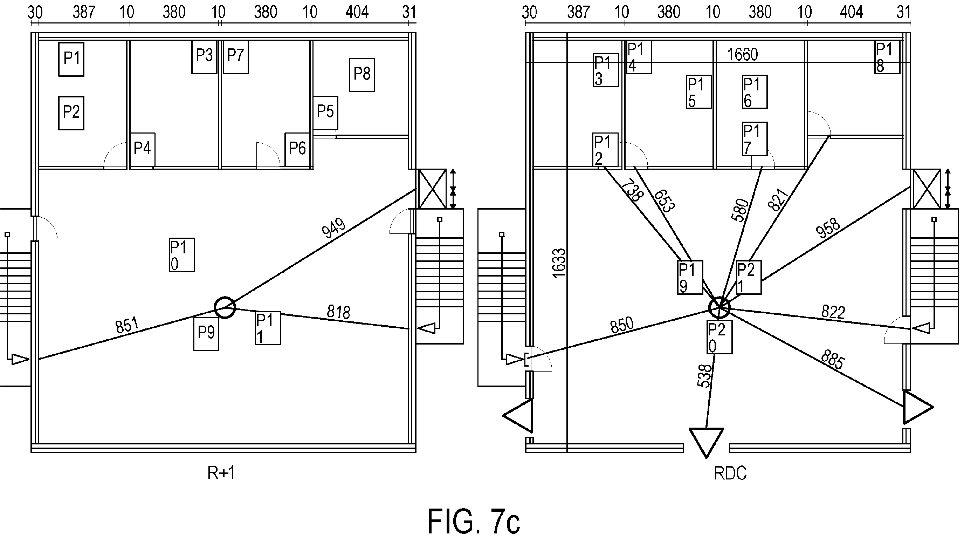

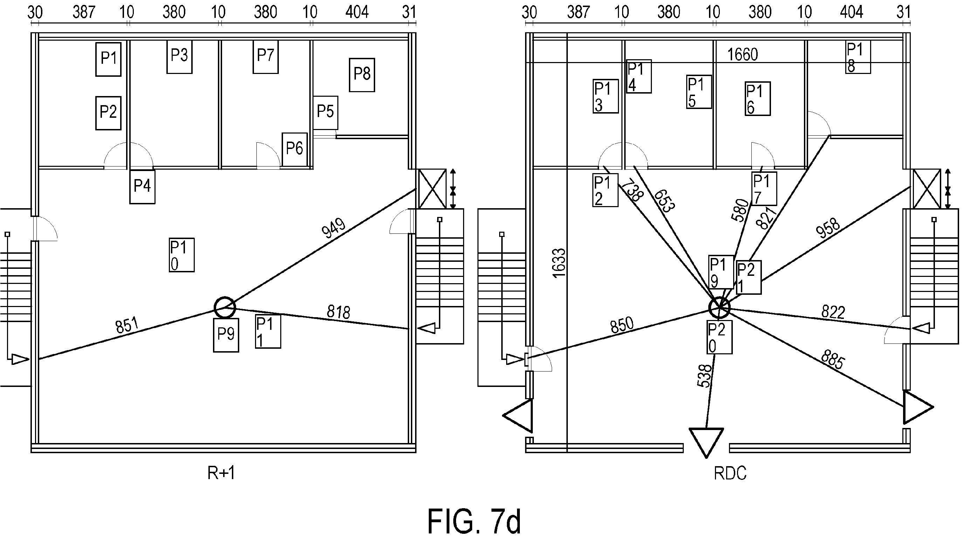

-   les figures 7a, 7b, 7c, 7d représentent le déplacement des individus sur les deux étages ;

-   la figure 8 représente une perspective du bâtiment : vue depuis le côté Sud ;

-   la figure 9 représente une vue de l'étage "R1" : observateur situé côté Sud ;

-   la figure 10 représente une vue de l'étage "Rdc" : observateur situé côté Sud ;

-   la figure 11 représente un niveau "Rdc" : hall et portes de sortie : observateur à l'Est ;

-   la figure 12 représente une vue des portes d'accès de l'étage "R1" au rez-de-chaussée "Rdc" ;

-   la figure 13 représente un niveau "R1 : salles, hall, escaliers, ascenseur et corridors ;

-   la figure 14 représente un ascenseur et escalier "Est" : observateur situé côté "Nord-Est" ;

-   la figure 15 représente un escalier "Ouest" : observateur situé côté "Nord-Ouest" ;

-   la figure 16 représente un ascenseur : portes "L1" et "L0" aux niveaux "R1 " et "Rdc" ;

-   la figure 17 représente des noeuds : cercles "virtuels" au sol ("R1" + escaliers + ascenseur) ;

-   la figure 18 représente un ensemble des noeuds : "Rdc", "R1", escaliers et ascenseurs

    (a) Noeuds dans salles, escaliers, hall, ascenseur et sorties (vue côté "Sud") ;
    (b) Vue récapitulative de tous les noeuds du bâtiment (vue côté "Sud-Est") ;

-   la figure 19 représente un ensemble des arêtes : "Rdc", "R1", escaliers et ascenseurs

    (a) Arêtes : segments dans salles, escaliers, halls et ascenseur (vue côté "Nord")
    (b) Vue globale des arêtes du bâtiment (vue côté "Sud-Ouest")
    (c) Vue globale des arêtes du bâtiment (vue côté "Est") ;

-   la figure 20 représente un DAG : graphe d'évacuation vers les sorties (vue du côté Sud) ;

-   la figure 21 représente des usagers au niveau "R1" du bâtiment (vue du côté Ouest) ;

-   la figure 22 représente des usagers au niveau "Rdc" du bâtiment (vue du côté Nord-Ouest) ;

- la figure 23 représente une liste d'attente des portes de sortie : position selon la distance la plus courte à la porte : vue depuis côté "Sud" ;

- la figure 24 représente une liste d'attente des noeuds de passage (seuil de porte) des salles "r1w", "r1m", "r1e", "t1" : vue depuis côté "Nord" ;

- la figure 25 représente une liste d'attente aux noeuds de passage (seuil de porte) des salles "R1" : vue depuis côté "Nord" ;

- la figure 26 représente une salle comportant 02 issues dénommées "1" et "2", et contenant 11 personnes "P :1" à "P :11" ;

- la figure 27 représente des phases intermédiaires lors de l'évacuation ;

- la figure 28 représente les derniers usagers en évacuation ;

- la figure 29 représente une salle comportant 02 issues dénommées "1" et "2", et contenant 99 personnes "P :1" à "P :99" ;

- la figure 30 représente les positions des usagers après au premier pas de temps ;

- la figure 31 représente les positions des usagers après au second pas de temps ;

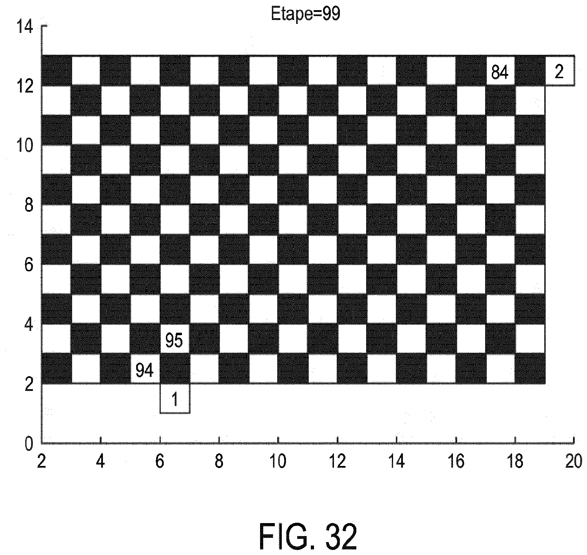

- la figure 32 représente les derniers usagers avant évacuation complète.

## DESCRIPTION DETAILLEE DE L'INVENTION

Le système est composé d'une architecture modulaire avec trois volets:

- Acquisition des données à base d'objets connectés (Bornes d'accès, Points de références, Capteurs).
- Application mobile/web qui permet à l'utilisateur/administrateur d'interagir avec le système (envoi d'informations et de notifications).
- Services pour le traitement des données collectées, et la synchronisation de la base de données.

L'invention se décline en cinq modules complémentaires :

- Module 1: Génération/Extraction du graphe de connectivité de toute position dans la maquette BIM (en anglais « Building Information Model ») (bâtiment, infrastructures, installations sportives, etc).
- Module 2: Calcul des sous-graphes (ensemble des chemins possibles vers les diverses portes de sorties, à partir d'une position quelconque), qui sont des parties du graphe général (Module 1).
- Module 3: Détermination/Localisation de chaque utilisateur connecté et situé dans l'ensemble à évacuer. Sa position (correspondance dans la maquette BIM) par référence à des ancres dans la maquette BIM et signaux radios (objet connecté vers ancres = bornes d'accès tells bornes Wifi).
- Module 4: Détermination des trajectoires optimales pour l'individu, selon son profil, les chemins potentiels et les positions de l'ensemble des personnes à évacuer.
- Module 5: Guidage via l'objet connecté par interfaces/signaux personnalisés (image sur écran, indication sonore, vibrations directionnelles sur bracelets ou cannes, guidage par agent ou signaux lumineux, drones ou essaims de drones)

En d'autres termes, le procédé selon l'invention présente les étapes suivantes :

i- à partir d'une maquette numérique du bâtiment (BIM, CIM),

- des moyens de calcul (M) reliés au serveur de contrôle (S) calculent des noeuds, les noeuds se répartissant entre :

  - des noeuds dispatcheurs Nd ;
  - des noeuds de passage N, les noeuds de passage N étant des points du chemin devant être empruntés par les utilisateurs pour se déplacer vers les divers lieux cibles donnés ;

- les moyens de calcul (M) calculent des arêtes A, chaque arête A reliant deux noeuds successifs en traversant les espaces sans rencontrer les obstacles et sans perte de visibilité entre deux noeuds successifs ; il est possible de tenir compte de l'espace « architectural » délimité par les parois et murs de séparation, et aussi des espaces réellement « navigables » au sein des «espaces architecturaux », prenant en considération les réels obstacles et obstructions aux passages des utilisateurs, qui peuvent être des objets ou autres ; ainsi les obstacles comprennent des parois et murs mais aussi des objets ou autres obstructions aux passages des utilisateurs ; ainsi les espaces présentent des noeuds et arêtes qui sont délimités par des obstacles aux déplacements des utilisateurs ; que ces obstacles soient des murs et/ou des objets ou autres, et soient générés par l'évènement ou pas ;

  - on définit des profils d'utilisateurs, chaque profil d'utilisateurs déterminant des noeuds et arêtes par lesquels peuvent se déplacer les utilisateurs de ce profil ; et ainsi de suite pour tous les profils;

- les moyens de calcul (M) assignent, à chaque noeud de passage, une liste d'attente d'utilisateurs par exemple actualisé en temps réel; pour les catégories d'usagers pouvant emprunter ces passages (à titre d'exemple, un noeud de passage attenant à un escalier ou escalator ne peut contenir des usagers tels que les personnes à mobilité réduites (PMR) sans accompagnements ou équipements spécifiques, pour emprunter ces escaliers ou escalators ; accès et chemins dédiés aux personnels habilités tels agents d'évacuation et de sécurité, des surfaces et espaces de navigation spécifiques pour des « usagers mécanisés » tels robots et autres automates, etc ) ;

- les moyens de calcul (M) calculent automatiquement, préférentiellement en tenant compte des obstacles, un graphe orienté acyclique (DAG) de déplacement vers les lieux cibles, constitué avec :

  • les noeuds N,
  • les arêtes A,

ii- on détecte la localisation réelle d'un événement dans le bâtiment et on détermine la nature de l'évènement, que l'on stocke sur le serveur de contrôle S ;

iii- Les moyens de calcul (M) calculent la position réelle de chaque utilisateur situé dans le bâtiment, avec la mesure de la puissance du signal de réception de l'objet connecté donné de l'utilisateur, réalisée par :

- • pour les espaces fermés, une liaison de communication sans fil à des bornes B d'accès de communication en liaison de communication avec le serveur de contrôle S et/ou
- • pour les espaces ouverts, une liaison de communication sans fil ou cellulaire avec le serveur de contrôle S ;

iv- en fonction de la nature de l'évènement qui entrainent l'inaccessibilité de certains noeuds du graphe orienté acyclique (DAG), les moyens de calcul (M) calculent le graphe orienté acyclique dit 'actualisé' (DAG') de déplacement vers les lieux cibles; ainsi cet événement le plus souvent diminue le nombre de noeuds et d'arêtes du DAG, et peut être vu comme un ou des obstacles supplémentaires ;

v- les moyens de calcul (M) transposent les positions réelles des utilisateurs dans la maquette numérique et les moyens de calcul (M) calculent le noeud dispatcheur Nd associé à chaque utilisateur et situé le plus près de l'utilisateur;

vi- à partir du graphe orienté acyclique actualisé et du noeud dispatcheur (Nd) associé à chaque utilisateur, les moyens de calcul (M) calculent pour chaque utilisateur un sous-graphe DODAG' qui correspond au chemin personnalisé à chaque utilisateur vers un lieu cible donné,

vii- on guide via l'objet connecté de l'utilisateur T ou des objets connectés T du bâtiment, par interfaces/signaux personnalisés, chaque utilisateur à suivre le sous-graphe DODAG' associé, vers un lieu cible donné, et les moyens de calcul (M) réitèrent les étapes précédentes ii à vi, pour actualiser le guidage, à une fréquence donnée et adaptée à l'évènement.

Ainsi, au cours du guidage, l'utilisateur peut être amené à avoir un lieu cible qui change en fonction de l'évènement, et du parcours des autres utilisateurs.

Un espace fermé est un espace défini comme un espace dans lequel l'utilisateur ne peut se connecter via son objet connecté au serveur de contrôle S, uniquement par des bornes B d'accès de communication installées dans le bâtiment (connexion uniquement en local) et en liaison de communication avec le serveur de contrôle S . A l'inverse de l'espace ouvert dans lequel la connexion de l'objet connecté de l'utilisateur est possible soit par des bornes B d'accès de communication soit en cellulaire.

Dans la présente invention, il est considéré de manière bien précise les espaces réellement « navigables » (prenant en considération les réels obstacles et obstructions aux passages des usagers : cas du mobilier fixe ou lourd, gradins de stages, rangées de bancs et fauteuils de lieux de spectacles ou amphithéâtres, installations et équipements dans les usines et ateliers, stands dans salles et halls d'exposition, à titre d'illustration ; de même, les espaces navigables doivent exclure, de manière dynamique évoluant dans le temps, certains périmètres dans le cas d'alertes et de mesures de sécurité aux alentours de bagages suspects ou de sources et fuites de produits nocifs ou fumées dans le cas d'incendies, etc) ; en outre, les obstacles additionnels, qui peuvent survenir du fait d'un événement quelconque (séismes, incendies, menaces physiques, fuites de produits, etc), sont automatiquement et dynamiquement, en temps réel, pris en compte pour l'actualisation des « espaces réellement navigables »

Les noeuds dispatcheur Nd sont des noeuds que peuvent emprunter les utilisateurs. Ils sont reliés aux noeuds de passage N (qui sont les noeuds par lesquels il faut forcément passer pour l'utilisateur pour sortir)

Dans un espace ouvert, il y a plusieurs possibilités pour localiser l'objet connecté :

1) s'il est doté de module GPS nous pouvons le localiser via le satellite ;
2) s'il est doté d'une interface de communication cellulaire (4G), nous pouvons se baser sur les relais cellulaires pour le localisé,
3) s'il est doté d'interface de communication sur une bande de fréquence ISM (non cellulaire), nous pouvons utiliser les techniques d'apprentissage basées sur la puissance du signal pour le localisé.

Les objets connectés T embarqués par les utilisateurs peuvent être utilisés soit uniquement pour calculer la position des utilisateurs (et dans ce cas il y a des objets connectés T localisés dans le bâtiment qui permettent de guider les utilisateurs), soit pour calculer la position des utilisateurs et pour guider les utilisateurs.

Le calcul pour chaque utilisateur du sous-graphe DODAG' est réalisé à l'aide :

- d'une «fonction objectif individuelle» pour chaque noeud dispatcheur Nd, basée sur les profils des utilisateurs, , pour :

  • attribuer à chaque utilisateur tous ses noeuds de passage N associés au noeud dispatcheur Nd, à proximité duquel se trouve chaque utilisateur,
  • constituer les listes d'attente de chaque noeud de passage N associé au noeud dispatcheur Nd,
  • constituer les listes d'attente de chaque noeud de passage N de l'ensemble des espaces fermés et/ou ouverts,

- d'une «fonction objectif générale» à partir des «fonctions objectif individuelles», qui présente en entrée l'état des listes d'attente de l'ensemble des noeuds de passage N de l'ensemble des utilisateurs dans l'ensemble des espaces fermés et/ou ouverts,

pour optimiser en sortie , les listes d'attente de l'ensemble des noeuds de passage N, par rapport à des paramètres d'entrée ou critères d'entrée ( par exemple, le temps ou la distance de parcours de l'ensemble des utilisateurs vers le ou les lieux cibles tels que ("E", "S", "W")).

En d'autres termes, la «fonction objectif générale» délivre en sortie tous les sous-graphes (DODAG') des utilisateurs, calculés pour optimiser les paramètres d'entrée (exemple réduire le temps et/ou distance de parcours de tous les utilisateurs), en tenant compte de chacun de leur profil et de leur localisation dans le bâtiment. La fonction « objectif générale » permet donc d'effectuer pour chaque utlisateur, parmi tous les DODAG' possibles de chaque utilisateur déterminés par la « fonction objectif individuel », de sélectionner les DODAG', pour chaque utilisateurs du groupe d'utilisateurs, permettant l'optimisation des paramètres d'entrée.

En d'autres termes, la «fonction objectif générale» délivre des listes d'attente de l'ensemble des noeuds, variant dans le temps et qui sont temporellement optimisées (ici les plus petites possibles à chaque étape de déplacement de l'ensemble des utilisateurs entre deux noeuds voisins) en tenant compte de chaque profil et de leur localisation dans le bâtiment (pour n'autoriser que certains déplacements ou des distances de déplacements spécifiques pour des utilisateurs donnés). A titre d'exemple, pour assurer une évacuation totale en un temps optimal, un usager pourrait effectuer un long détour et être redirigé, du fait du temps d'attente global ou de conflit de trajectoires dans le cas de flux croisés de personnes, vers une porte plus lointaine que celle, la plus proche, qu'il aurait empruntée s'il avait été seul usager.

Avantageusement, l'optimisation de la « fonction objectif générale » est réalisée avec l'une des stratégies suivantes :

- linéaire (max) ;

- « MRHOF » (en anglais « Minimum Rank with Hystérésis Objective Function ») ; fonction objective du rang minimum avec Hystérésis.

Cette fonction est standardisée par l'IETF (acronyme anglais « Internet Engineering Task Force ») sous forme d'une RFC (acronyme anglais « Request For Comments ») numéro : 6719 ; une référence de publication est Omprakash Gnawali and Philip Levis. (2012).

- « ETX Objective Function » ; elle est utilisée dans le contexte de transmission réseau qui se base sur le nombre de paquet transmet et reçu (elle mesure la fiabilité d'un lien de communication). Dans notre cas, elle mesure la fiabilité d'un chemin en termes de flux (Omprakash Gnawali and Philip Levis, 2010).

- stratégie min max ; c'est la stratégie qui consiste à minimiser la perte maximum (c'est-à-dire dans le pire scénario). Cette stratégie est très connue dans les problèmes d'optimisation et de recherche opérationnelle ; une référence possible est C. Jorgensen and S. Powell (1987).

La «fonction objectif individuelle» peut aussi être une logique floue.

Avec une fonction objectif individualisée, au « niveau Noeud dispatcheur Nd (vertex : $V_j$ , j étant l'indice du noeud)»,

$$S_j = \sum_{i=0}^{k} \alpha_i \cdot \left( \frac{m_i}{\gamma_i} \right) ,$$

$$\alpha_i = \begin{cases} 0 & \text{if } m_i < m_i^{lo} \\ 1 & \text{if } m_i^{lo} \leq m_i \leq m_i^{hi} \\ +\infty & \text{if } m_i^{hi} < m_i \end{cases}$$

où $\alpha$ = valeur d'appartenance et le vecteur poids relatifs pour normalisation $\Gamma = [\gamma_0, \gamma_1, ..., \gamma_k]$, avec les intervalles de valeurs des paramètres :

- $m_i^{min}$ la plus petite valeur possible de $m_i$,
- $m_i^{lo}$ la limite inférieure pour commencer à considérer $m_i$,
- $m_i^{hi}$ la limite supérieure avant de considérer seulement $m_i$,
- $m_i^{max}$ la valeur maximale possible de $m_i$,

et l'optimum sous contraintes par la «fonction objectif générale» correspondant à toute l'arborescence

$$P_\zeta(V_j) = \min_{\zeta \in Z} (S_\zeta)$$

, à partir des fonctions sur chaque Noeud dispatcheur Nd « vertex : $V_j$ ».

Avantageusement, le profil des utilisateurs peut comporter les informations suivantes, en vue de calculer le DODAG' personnalisé:

- catégorie de mobilité : Personne à Mobilité Réduite, enfant ;
- l'âge de l'utilisateur;
- présence d'autres utilisateurs spécifiques (donnés ou faisant partie de sa famille) ;
- profils différenciés (non voyant ; non entendant ; claustrophobes).

L'événement peut être:

- une urgence (sécurité des personnes, colis piégé, Feu/incendie, explosion, écroulement d'une partie d'un ouvrage, obstacle, situation menaçante, zone d'exclusion, etc..), et le procédé permet d'évacuer les personnes vers les lieux cibles qui sont des sorties, ou

- dit normal (recherche de confort ou acheminement vers des points d'intérêt, par exemple des magasins, centres culturels, installations sportives, gares, aéroports,..., fluidifier les files d'attente, guider les livreurs vers les points de livraison/clients, ou des emplacements cibles tels lieux de spectacle..) et le procédé permet d'acheminer les utilisateurs vers les lieux cibles.

Avantageusement dans l'étape ii, on détermine la nature de l'événement et sa localisation réelle dans le bâtiment :

a) automatiquement par des algorithmes et/ou
b) manuellement par entrée d'informations des utilisateurs qui sont envoyées au serveur de contrôle S, afin de déterminer dans le graphe d'évacuation les noeuds les plus proches de l'évènement.

Il y a plusieurs techniques de détection des anomalies à partir par exemple de la vidéo surveillance.
Deux approches les plus utilisées sont :

1) basées sur l'analyse des trajectoires,
2) basées sur analyse des Pixels.

Voici des exemples de références:

- H. Wang et al. (2011), S. Cosar et al. (2016).

Pour les algorithmes de détection des incendies, on peut considérer les références suivantes :

1- A partir des images/vidéo : e.g. E. Cetin et al. (2013).

2- A partir des capteurs C renifleurs : e.g. J. Fonollosa et al. (2018).

Les capteurs C de détection de l'évènement utilisables peuvent être de divers types: caméra, capteur renifleur, ou l'objet connecté lui-même.
Il s'agit donc de l'ensemble des capteurs C physiques (comme de détection des feux, des gaz toxiques, etc...), mais aussi des capteurs C virtuels qui sont des algorithmes de fusion et d'analyse de données (scalaires ou multimédia). Par exemple, détection de singularité à partir d'une analyse d'image ou de vidéo. Souvent on fait appel à des techniques d'apprentissage et d'intelligence artificielle
Dans une réalisation le bâtiment présente plusieurs étages, et dans l'étape vi on calcule, à partir de chaque noeud de passage, un sous-graphe DODAG' dans tous les étages connectés entre eux via les noeuds de passage inter-étages (escaliers, rampes, escalators, ascenseurs...) qui est extrait du graphe DAG global pour traiter toute position dans le bâtiment.
Avantageusement, dans l'étape ii, dans une étape d'apprentissage, on a mesuré la puissance du signal de réception de l'objet connecté situé à des positions connues dans le bâtiment en fonction des bornes B de communication sans fil et on a déterminé la relation puissance du signal de réception et position dans le bâtiment, par exemple avec un algorithme KNN.
Avantageusement, les interfaces/signaux personnalisés de l'étape vii sont :

- des images sur écran,
- par réalité virtuelle et augmentée (RVA),
- indication sonore, vibrations directionnelles sur bracelets ou cannes, guidage par agent ou signaux lumineux, drones ou essaims de drones

La présente invention concerne aussi le dispositif de localisation individualisée et de guidage D, en fonction d'un évènement, des déplacements d'utilisateurs, dans un bâtiment qui présente des espaces fermés et/ou des espaces ouverts délimités par des obstacles, suivant des chemins menant vers plusieurs lieux cibles donnés.
Ce dispositif présente :

- un serveur des ressources à distance qui est un serveur de contrôle S accessible par un réseau de type « Cloud Computing » ;

- des capteurs C pour détecter un événement automatiquement, semi-automatiquement ou manuellement, et sa localisation réelle dans le bâtiment, que l'on stocke sur le serveur de contrôle S ;

- des moyens de calcul M reliés au serveur de contrôle S et aux capteurs C.

Ces moyens de calcul M permettent dans une première étape :

i- à partir d'une maquette numérique du bâtiment (BIM, CIM),

- de calculer des noeuds N se répartissant entre :

  • des noeuds dispatcheurs Nd (cas de points centroïdes dans un espace tel salle, hall, couloir...);
  • des noeuds de passage (cas de portes, entrées et sorties d'ascenseur, points hauts et bas de rampes ou d'escaliers...), les noeuds de passage étant des points du chemin devant être empruntés par les utilisateurs pour se déplacer vers les divers lieux cibles donnés "E", "S", "W" ;

- calculer des arêtes A, chaque arête reliant deux noeuds successifs en traversant les espaces sans rencontrer les obstacles et sans perte de visibilité entre deux noeuds successifs.

- assigner, à chaque noeud de passage, une liste d'attente d'utilisateurs ;

- calculer automatiquement un graphe orienté acyclique DAG (en anglais « Directed Acyclic Graph ») de déplacement vers les lieux cibles constitué avec :

  • les noeuds N
  • les arêtes A.

Ensuite, ces moyens de calcul M permettent dans une seconde et troisième étapes :
ii+iii- de calculer la position réelle de chaque utilisateur situé dans le bâtiment, avec la mesure de la puissance du signal de réception de l'objet connecté donné de l'utilisateur, réalisée par :

• pour les espaces fermés, une liaison de communication sans fil à des bornes B d'accès de communication en liaison de communication avec le serveur de contrôle S ,les bornes B d'accès ayant une position identifiée dans la maquette numérique (BIM, CIM) et servant de points d'ancrage ou ancres ; et/ou
• pour les espaces ouverts, une liaison de communication sans fil ou cellulaire avec le serveur de contrôle S ;

Ensuite, ces moyens de calcul M permettent dans une quatrième et cinquième étapes:

iv- de calculer le graphe orienté acyclique dit 'actualisé' (DAG') de déplacement vers les lieux cibles en fonction de la nature de l'évènement qui entrainent l'inaccessibilité de certains noeuds du graphe orienté acyclique (DAG) ;

v- de transposer les positions réelles des utilisateurs dans la maquette numérique et calculent le noeud dispatcheur Nd associé à chaque utilisateur et situé le plus près de la position réelle de l'utilisateur;

Ces moyens de calcul M permettent dans une sixième étape :
vi- à partir de chaque noeud du graphe orienté acyclique actualisé, de calculer pour chaque utilisateur, un sous-graphe DODAG' (en anglais « Destination Oriented Directed Acyclic Graph ») qui correspond au chemin personnalisé à chaque utilisateur vers un lieu cible donné "E", "S", "W".
Enfin, ces moyens de calcul M permettent dans une septième étape :
vii- de réitérer les étapes suivantes ii à vi, pour actualiser le guidage, à une fréquence donnée et adaptée à l'évènement, des objets connectés T en liaison de communication avec le serveur de contrôle S par les bornes B de communication, et qui guident via l'objet connecté de l'utilisateur ou des objets connectés T du bâtiment, par interfaces/signaux personnalisés, chaque utilisateur à suivre le sous-graphe DODAG' associé, vers un lieu cible donné.
Ces moyens de calcul M calculent le sous-graphe DODAG', à l'aide :

• d'une «fonction objectif individuelle» telle que définie ci-avant,

• d'une «fonction objectif générale» telle que définie ci-avant,

pour optimiser les listes d'attente de l'ensemble des noeuds de passage.

Les noeuds dispatcheurs Nd peuvent être des points centroïdes dans un espace tel salle, hall, couloir...).

Les noeuds de passage peuvent être des portes, entrées et sorties d'ascenseur, points hauts et bas de rampes ou d'escaliers...).

La distinction entre noeuds dispatcheurs Nd et noeuds de passage permet de fluidifier les passages sur tous les noeuds de passage du bâtiment pour tous les utilisateurs.

Les objets connectés T peuvent être choisis parmi la liste suivante :

- Smartphone,
- Canne connectée (avec dispositif de vibration),
- Fauteuil roulant connecté,
- Tablette,
- Ecran connecté,
- Lunette connectée (lunette de RV/RA),
- Bracelet connecté (avec dispositif de vibration, et écran),
- Capteur connecté lumineux,
- Dispositifs de communication pour les agents de sécurité/d'évacuation,
- Robot connecté (doté d'un écran pour le guidage visuel ou vocal),
- Drone connecté (doté d'un écran pour le guidage visuel ou vocal),

Les objets connectés T peuvent être reliés au serveur de contrôle S avec deux modes possibles différenciés: « mode individuel » ou « mode groupe ».

Les bornes B de communication sans fil peuvent être fixes et/ou mobiles (sur des drones, des utilisateurs avec des renifleurs ou des utilisateurs agents et assistants d'évacuation).

Les objets connectés T peuvent présenter une interface pour entrer manuellement l'évènement et des informations par les utilisateurs, qui sont envoyés au serveur de contrôle S, afin de déterminer dans le graphe d'évacuation les noeuds le plus proche de l'évènement;

Les objets connectés T peuvent présenter des moyens pour notifier, aux utilisateurs, la mise à jour du chemin.

Les notifications sont des messages d'information envoyés par le serveur vers les objets connectés T pour les informer des mises à jour sur le trajet d'évacuation ou/et du délai estimé pour évacuer le bâtiment. L'affichage des notifications est soit textuel, ou graphique, avec les nouvelles indications sur le chemin actualisé.

Le bâtiment peut être de tout type, par exemple : une installation scolaire, un centre commercial, une infrastructure sportive, une salle de concert, une « fan zone ».

## Exemple de Bâtiment choisi en guise d'illustration

Le bâtiment choisi en guise d'illustration comporte :

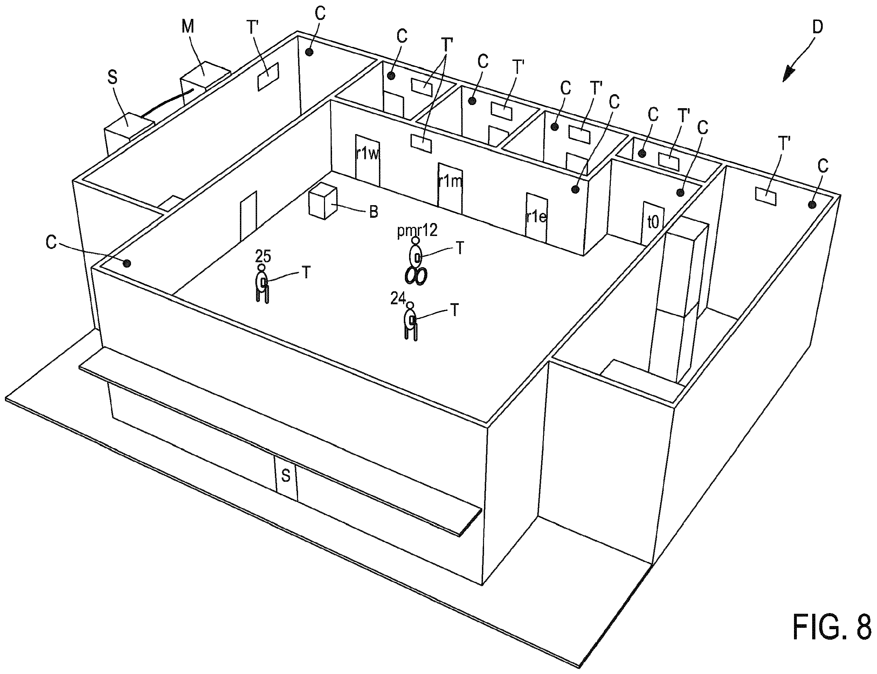

1. Deux étages, voir Fig. 8 :

   (a) Rez de chaussée, dénommé "Rdc" ;
   (b) Un étage supérieur, dénommé "R1"

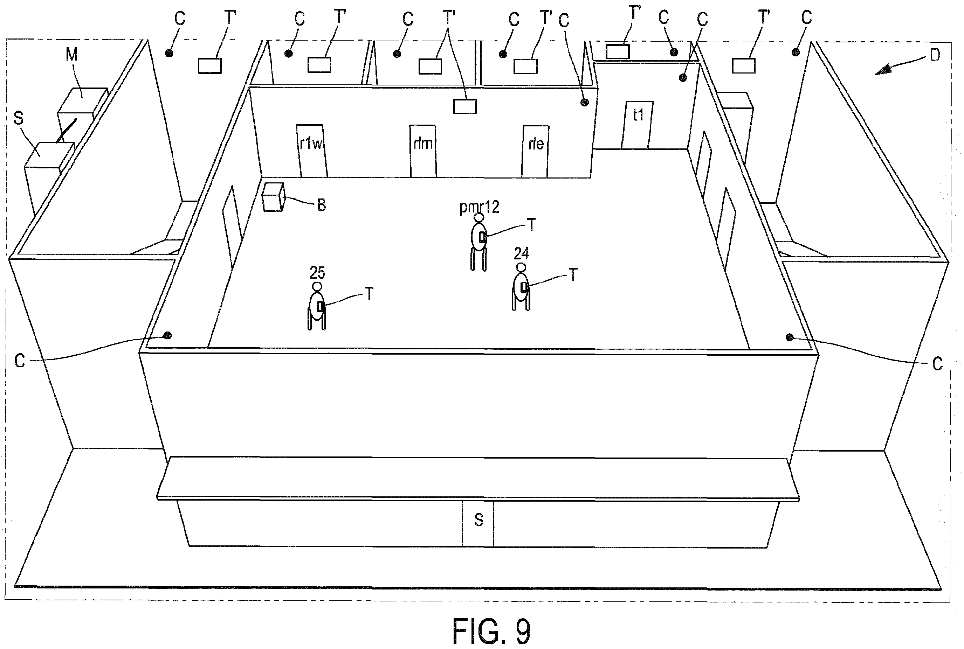

2. L'étage "R1" contient, voir Fig. 9 :

   (a) 4 salles dénommées "r1w", "r1m", "r1e" (situées, respectivement, côté "Ouest", "Milieu", "Est") et "t1" qui sert de local technique.
   Depuis chacune des 4 salles, une porte (sur laquelle est inscrit le nom de la salle) permet d'accéder au hall.

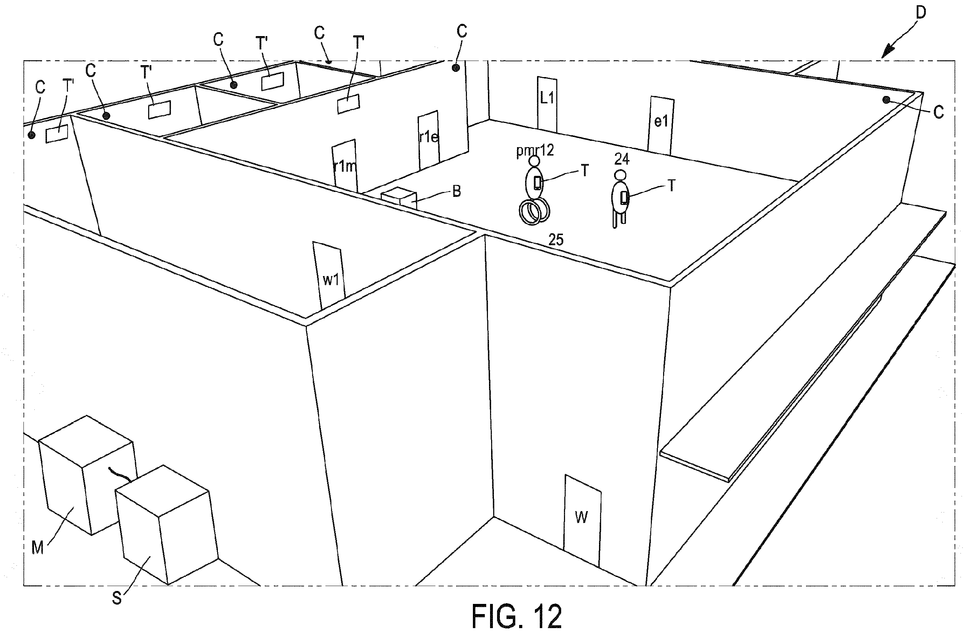

   (b) Un hall qui permet ensuite d'accéder au niveau inférieur "Rdc" en passant par 3 chemins possibles en empruntant, voir Fig. 12 :

      i. soit la porte d'accès "Est", dénommée "e1",
      ii. soit la porte d'accès "Ouest", dénommée "w1",
      iii. soit la porte de l'ascenseur, dénommée "L1".

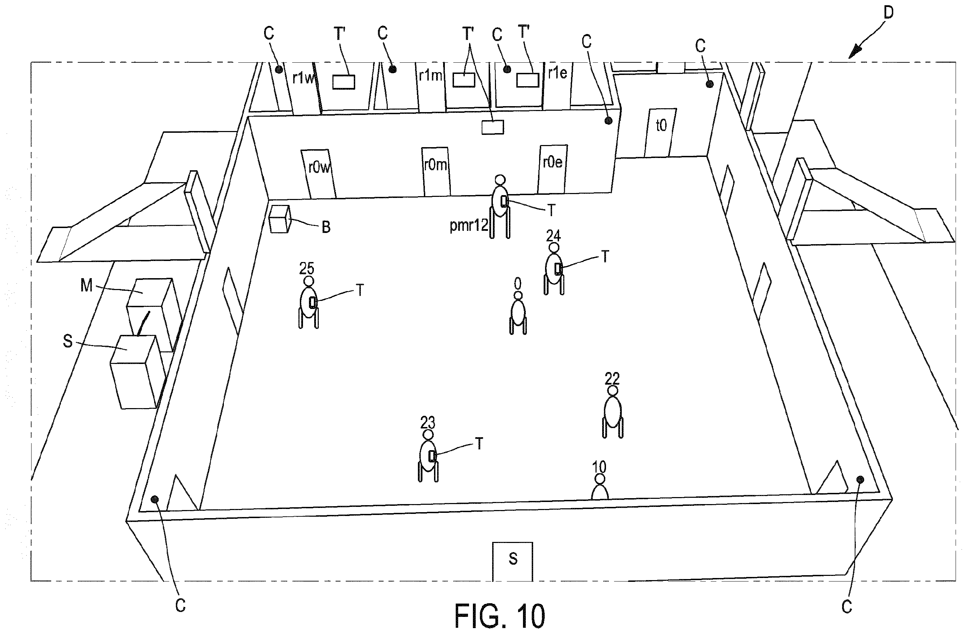

3. L'étage "Rdc" contient, voir Fig. 10 :

(a) 4 salles dénommées "r0w", "r0m", "r0e" (situées, respectivement, côté "Ouest", "Milieu", "Est") et "t0" qui sert de local technique.

Depuis chacune des 4 salles, une porte (sur laquelle est inscrit le nom de la salle) permet d'accéder au hall.

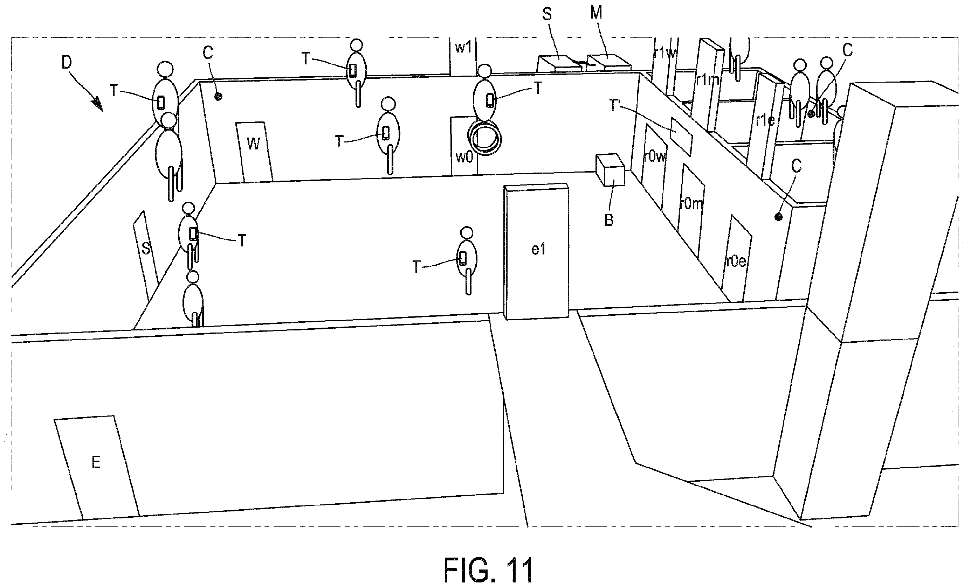

(b) Un hall qui permet ensuite d'accéder à l'extérieur du bâtiment en empruntant, voir Fig. 11

i. soit la porte de sortie "Est", dénommée "E",
ii. soit la porte de sortie "Ouest", dénommée "W",
iii. soit la porte de sortie "Sud", dénommée "S".

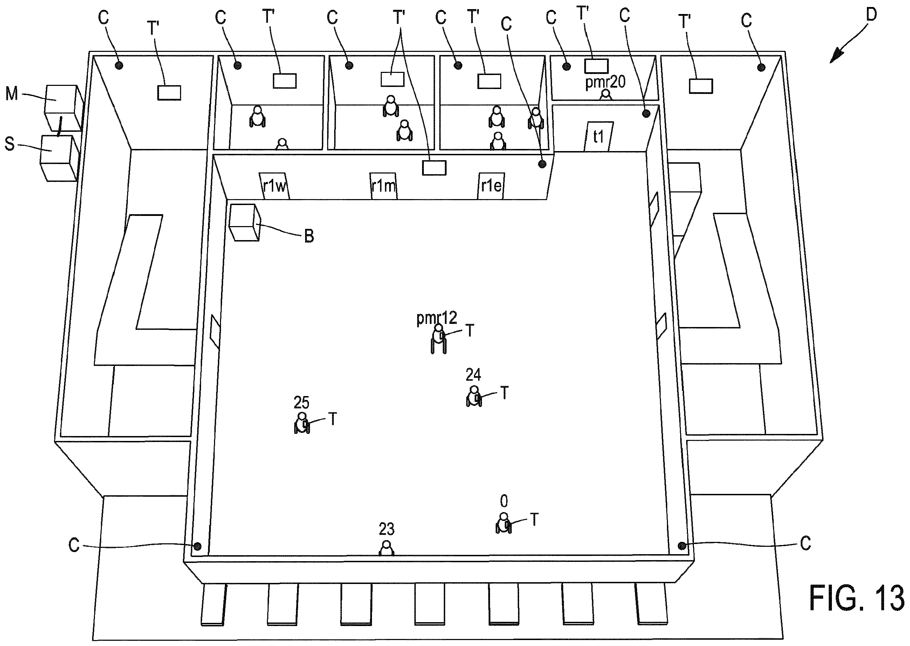

4. Deux escaliers, voir Fig. 13 :

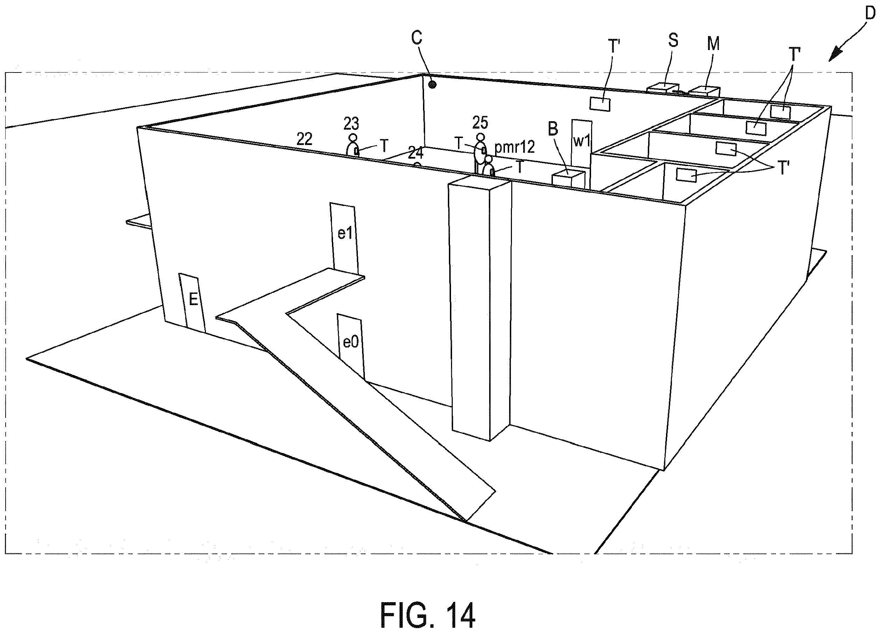

(a) l'escalier "Est" qui est emprunté en sortant du niveau "R1" (porte "e1") pour redescendre vers un corridor au rez-de-chaussée qui débouche dans le hall du rez-de-chaussée en empruntant la porte dénommée "e0", voir Fig. 14 ;

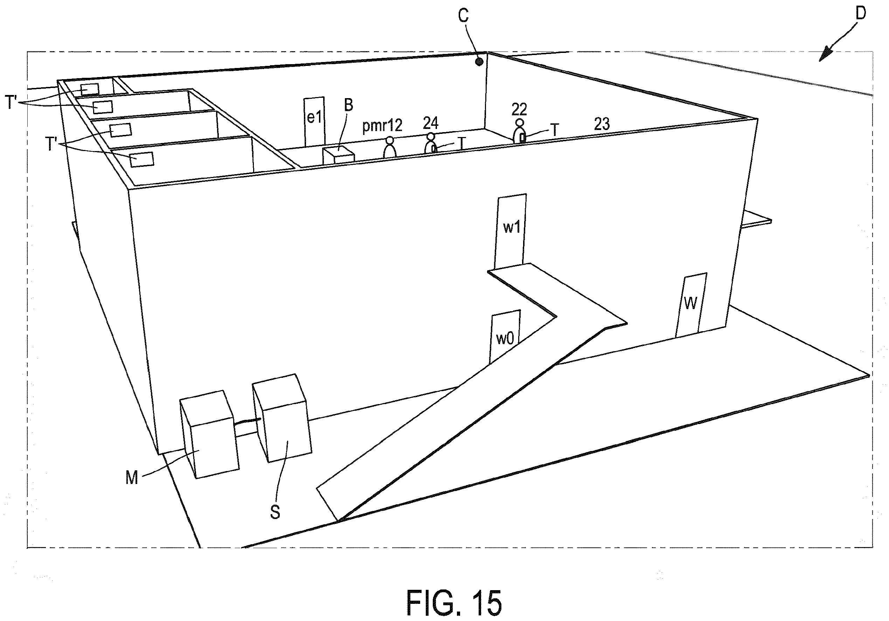

(b) l'escalier "Ouest" qui est emprunté en sortant du niveau "R1" (porte "w1") pour redescendre vers un corridor au rez-de-chaussée qui débouche dans le hall du rez-de-chaussée en empruntant la porte dénommée "w0", voir Fig. 15 ;

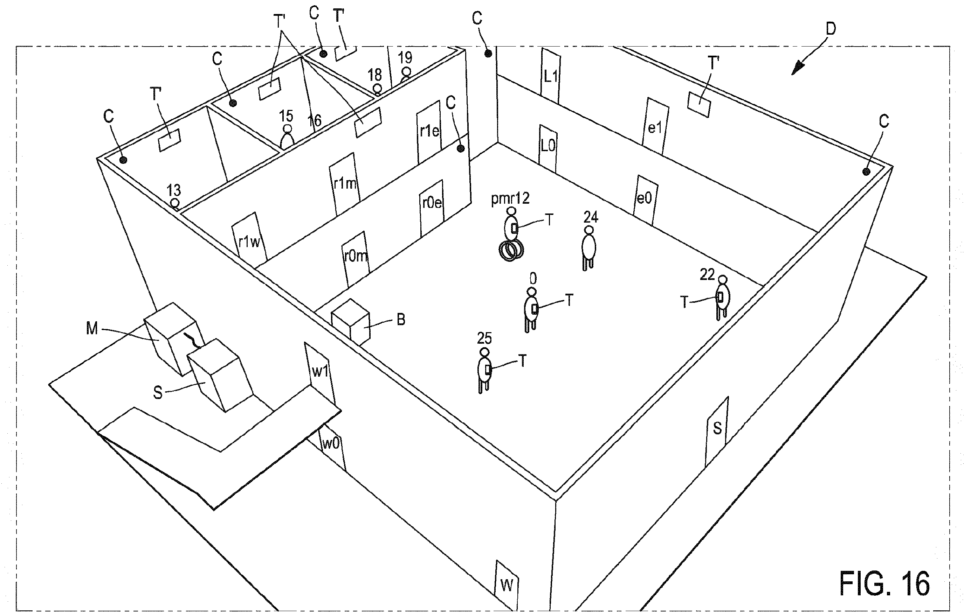

5. Un ascenseur, voir Fig. 16 :

(a) dont la porte au niveau "R1" est dénommée "L1" ;
(b) dont la porte au niveau "R0" est dénommée "L0".

### Extraction des noeuds et arêtes A

### Noeuds

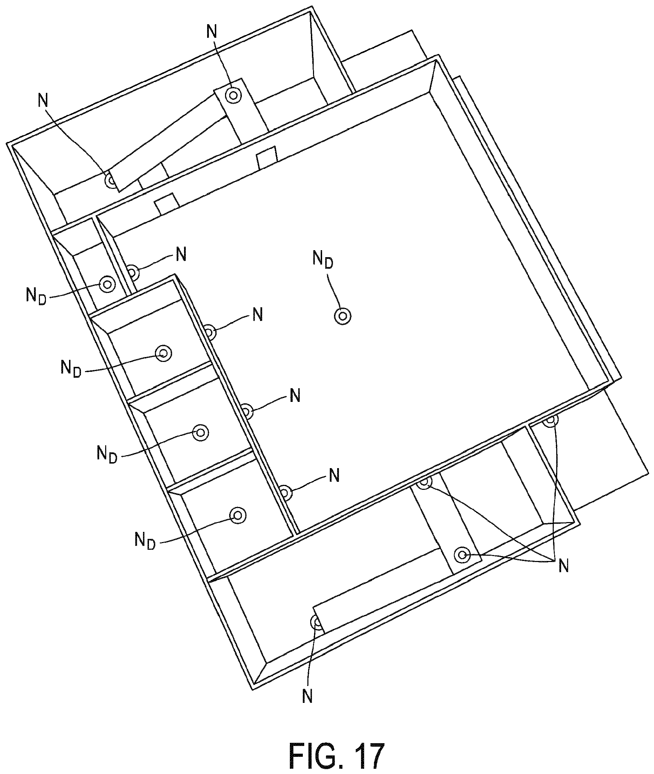

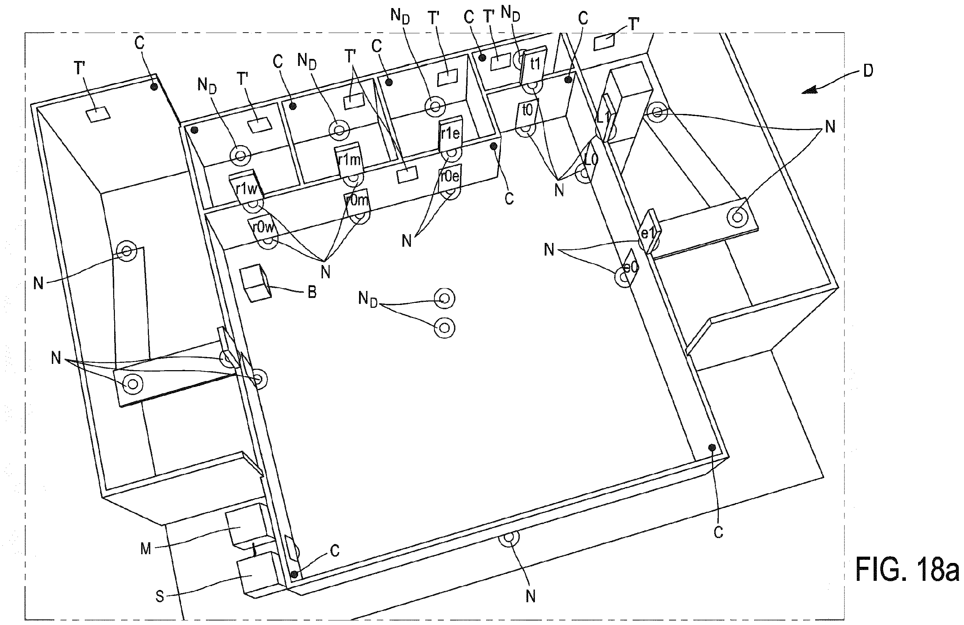

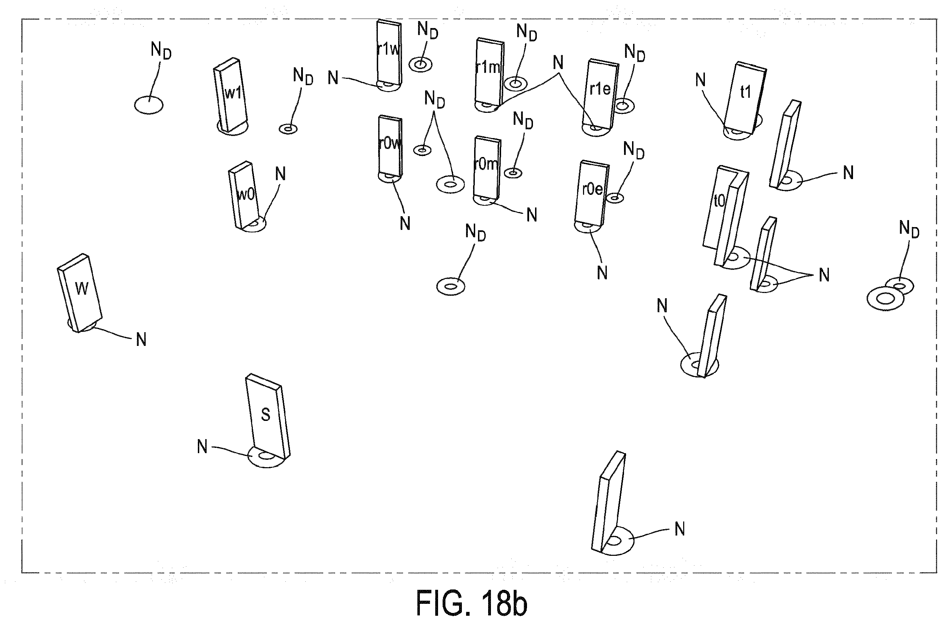

Les noeuds sont des points "virtuels". Ils sont de deux types, voir Figs. 17 - 18 :

1. noeud dispatcheur Nd : il représente le centre géométrique de chacun des divers halls et salles ; ce centre est aussi appelé "centroïde".

2. noeud de passage, qui représente :

(a) un seuil de porte (salle, ascenseur, hall),
(b) un point en extrémité de palier d'escalier (point haut ou bas).

### Arêtes A

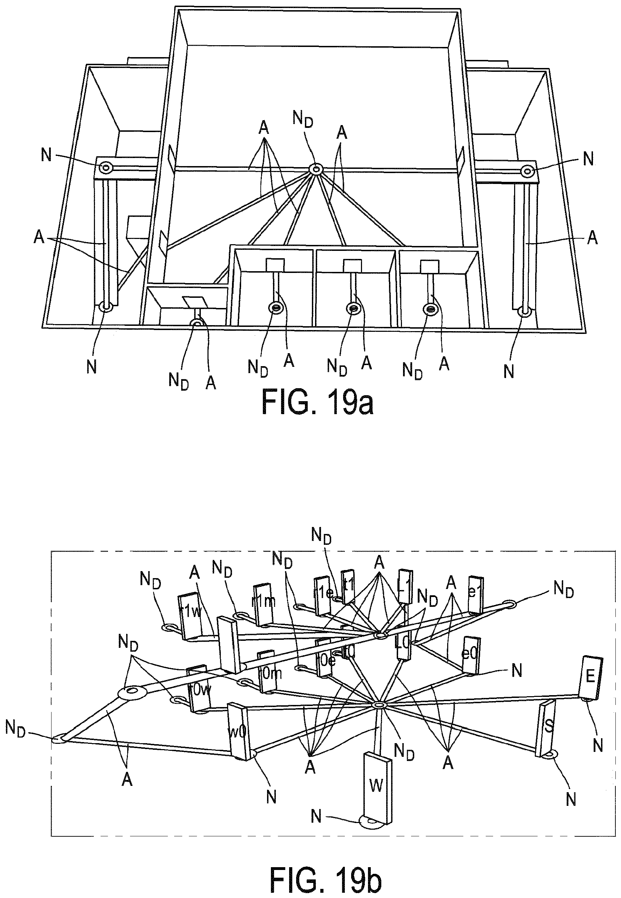

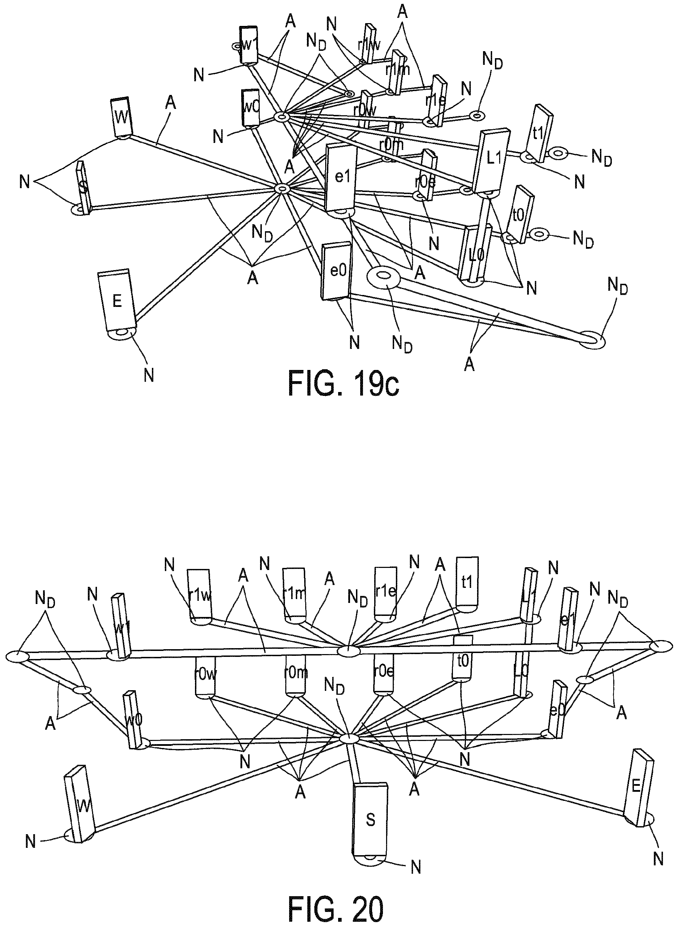

Les arêtes A, liaisons bidirectionnelles sauf cas particuliers, sont des segments de droites virtuelles qui relient deux noeuds successifs sans rencontrer d'obstacles et sans perte de visibilité.
Elles sont définies selon la méthodologie suivante, voir Fig. 19 :

1. "noeud dispatcheur Nd" à "noeud de passage" : l'arête relie le noeud "centroïde" d'une salle ou hall à un noeud de passage.

2. "noeud de passage" à "noeud de passage" : l'arête relie le noeud "seuil" d'une porte à un noeud de passage d'une surface de transfert.

A titre d'exemple, on peut considérer les cas suivants, pour les surfaces de transferts :

(a) noeuds seuils des portes d'un niveau au suivant, dans le cas d'ascenseurs, par exemple.
(b) noeuds d'extrémité ou intermédiaires des paliers et palées, dans le cas d'escaliers, rampes d'accès ou escalators, par exemple.

NOTA : Il convient de remarquer, qu'en réalité, ces surfaces de transferts peuvent être, ellesmêmes, définies

comme des espaces (cas de corridors), dans les maquettes digitales (BIM ou CIM).

Dans ce cas, les points extrêmes (points "haut", "bas", "intermédiaire") seront considérés comme des "noeuds de passage" reliés aux noeuds dispatcheur Nds des espaces intermédiaires (leurs centroïdes).

## DAG : Graphe orienté acyclique (en anglais « Directed Acyclic Graph »)

Le Graphe orienté acyclique (DAG) est défini par l'arborescence entièrement constituée des "noeuds" et des "arêtes A" les reliant deux à deux, voir Fig. 20 :

1. A l'étage "R1", le graphe est constitué d'un sous-graphe (en anglais « sub-DAG » "R1"), défini comme suit :

(a) en extrémité du DAG, il y a les 4 noeuds centroïdes des salles "r1w", "r1m", "r1e" et 't1'
(b) 4 arêtes A les relient aux noeuds de passage (seuils des portes de chacune de ces 4 salles)
(c) de ces 4 noeuds seuils des portes, partent alors 4 arêtes A qui les relient au noeud dispatcheur Nd (centroïde) du hall attenant et communiquant avec ces 4 salles ; il pourrait être représenté aussi par les arêtes A qui relieraient les 4 noeuds seuils des portes directement vers les noeuds seuil de porte ("Est" et "Ouest") et le noeud seuil escalier, sans passer par le noeud dispatcheur Nd (centroïde) du hall ; ici les arêtes A passent par le noeud dispatcheur Nd (centroïde) car il a été considéré dans cet exemple qu'il fallait passer nécessairement par ce noeud dispatcheur Nd ;
(d) de ce noeud dispatcheur Nd partent 3 arêtes A qui le relient aux 3 portes permettant d'accéder au niveau "Rdc", à savoir par un transfert via l'ascenseur, l'escalier "Est" et l'escalier "Ouest" par les noeuds seuils 'e1', 'w1' et 'L1'

2. Pour le transfert de l'étage "R1" vers le rez-de-chaussée "Rdc", le graphe comporte un sous-graphe (en anglais « sub-DAG » "R1 to Rdc"), défini comme suit :

(a) chaque noeud seuil de porte de l'escalier ("Est" et "Ouest") est relié par une arête à un noeud extrême du palier supérieur
(b) chaque noeud extrême du palier supérieur est relié par une arête à un noeud extrême bas de l'escalier (palier inférieur)
(c) chaque noeud bas est relié par une arête à un noeud seuil de la porte d'accès au hall du niveau "Rdc".
(d) le noeud seuil de la porte d'ascenseur (niveau R1) est relié par une arête au noeud seuil de la porte d'ascenseur (niveau Rdc).

3. Au niveau "Rdc", le graphe est constitué d'un sous-graphe (en anglais « sub-DAG » "Rdc"), défini comme suit :

(a) en extrémité du DAG, il y a les 4 noeuds centroïdes des salles "r0w", "r0m", "r0e" et "t0"
(b) 4 arêtes A les relient aux noeuds de passage (seuils des portes de chacune de ces 4 salles)
(c) de ces 4 noeuds seuils des portes et des 3 portes d'accès depuis le niveau "R1" (noeuds "e0", "w0" et "L0") partent alors 7 arêtes A qui les relient au noeud dispatcheur Nd (centroïde) du hall attenant et communiquant avec ces 4 salles et les portes de transfert depuis le niveau "R1" par les noeuds seuils 'e1', 'w1' et 'L1' ; il pourrait être représenté aussi par les arêtes A qui relieraient les 4 noeuds seuils des portes directement vers les noeuds seuil de porte ("E" , "S" et "W") et le noeud seuil escalier, sans passer par le noeud dispatcheur Nd (centroïde) du hall ; ici les arêtes A passent par le noeud dispatcheur Nd (centroïde) car il a été considéré dans cet exemple qu'il fallait passer nécessairement par ce noeud dispatcheur Nd (centroïde);
(d) de ce noeud dispatcheur Nd partent 3 arêtes A qui le relient aux 3 noeuds seuils des portes ("E", "S", "W") permettant de quitter le bâtiment.

## USAGERS : noeuds dispatcheur Nds associés

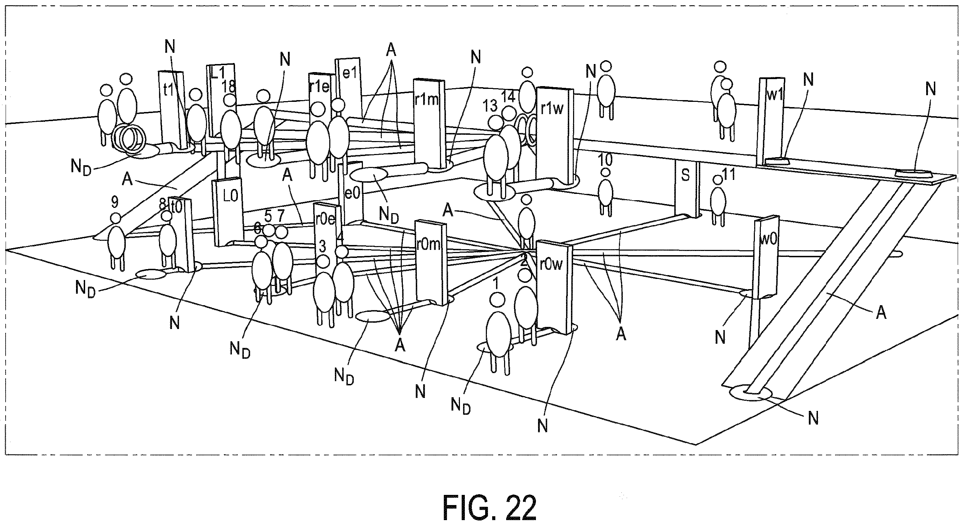

En guise d'illustration, divers utilisateurs (USAGERS) dont des PMR (Personnes à Mobilité Réduite) sont arbitrairement positionnés dans le bâtiment, voir Fig. 22. De ce fait, leur position étant localisée dans un espace (salle, hall, corridor), elles sont alors associées au noeud dispatcheur Nd (centroïde) de cet espace, i.e. :

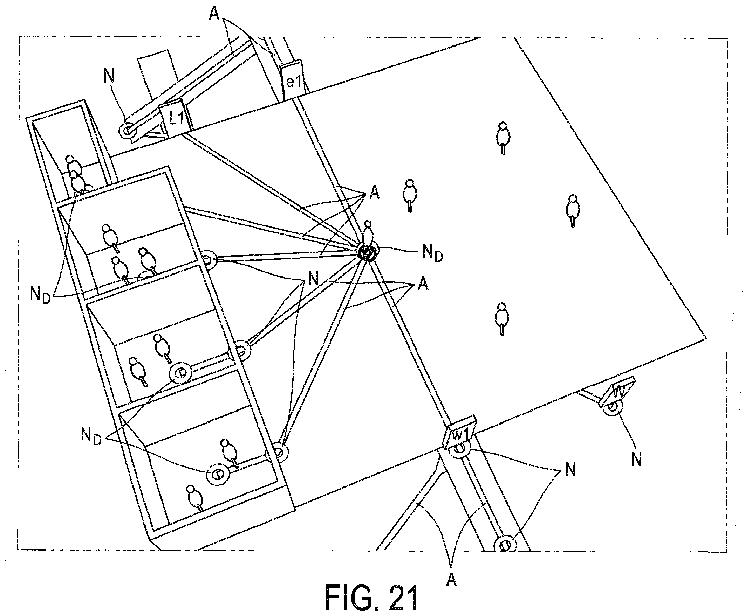

1. A l'étage "R1", les utilisateurs sont identifiés dans les positions illustrées en Fig. 21 :

(a) les deux personnes se trouvant en salle "r1w", y étant localisées, sont associées au noeud dispatcheur Nd (centroïde) de cette salle "r1w".

(b) les deux personnes se trouvant en salle "r1m", y étant localisées, sont associées au noeud dispatcheur Nd de cette salle "r1m".
(c) les trois personnes se trouvant en salle "r1e", y étant localisées, sont associées au noeud dispatcheur Nd de cette salle "r1e".
(d) les deux personnes, dont une PMR, se trouvant en salle "t1", y étant localisées, sont associées au noeud dispatcheur Nd de cette salle "t1".
(e) les cinq personnes, dont une PMR, se trouvant dans le hall de cet étage, y étant localisées, sont associées au noeud dispatcheur Nd de cet espace de hall.

2. A l'étage "Rdc", les utilisateurs sont identifiés dans les positions illustrées en Fig. 22:

(a) les deux personnes se trouvant en salle "r0w", y étant localisées, sont associées au noeud dispatcheur Nd (centroïde) de cette salle "r0w".
(b) les deux personnes se trouvant en salle "r0m", y étant localisées, sont associées au noeud dispatcheur Nd de cette salle "r0m".
(c) les trois personnes se trouvant en salle "r0e", y étant localisées, sont associées au noeud dispatcheur Nd de cette salle "r0e".
(d) les deux personnes se trouvant en salle "t0", y étant localisées, sont associées au noeud dispatcheur Nd de cette salle "t0".
(e) les trois personnes se trouvant dans le hall de cet étage, y étant localisées, sont associées au noeud dispatcheur Nd de cet espace du hall.

### DODAG' : DAG orienté spécifique à chaque usager

Pour rappel, le DAG est global au bâtiment : graphe "noeuds N, Nd-arêtes A". Il dépend de l'architecture (répartition des espaces) : il décrit les chemins depuis tout endroit du bâtiment vers les sorties.

Le DODAG', propre à chaque usager, en est une portion (sous-graphe dynamique), démarrant depuis la position courante (usager), pour guider l'usager vers la sortie la plus idoine (guidage optimal selon son profil et les foules présentes), voir Table 1 :

1. pour les usagers, des 4 salles à l'étage "R1", l'évacuation exige de les guider, d'abord, vers les noeuds de passage les plus proches (noeud "seuil de porte" de leur salle). Ils accèdent, dès lors, à l'espace attenant soit le hall du niveau "R1" ("hall R1"). Leur chemin sera alors similaire à ceux déjà présents dans ce "hall R1", i.e. : les PMR (ou habilitation à emprunter certains accès ) ; empruntent l'ascenseur (noeud de passage "L1"), tandis que les "non PMR" peuvent emprunter l'ascenseur ou l'un des escaliers ("Est" : noeud de passage "e1", ou "Ouest" : noeud de passage "w1"). Acheminés via l'ascenseur ou les escaliers, ils débouchent dans le "hall Rdc", par les noeuds de passage ("L0", "e0" ou "w0" selon le chemin emprunté pour rejoindre le rez-de-chaussée). Ils doivent ensuite être orientés vers l'une des portes de sorties ("E", "S" ou "W"), selon l'encombrement des listes d'attente de ces 3 portes.
2. De manière similaire, les usagers des 4 salles (niveau Rdc) accèdent aux noeuds "seuil de porte" (noeud de passage) de leur salle pour accéder ainsi au hall du niveau "Rdc" (dit "hall Rdc"). Ils doivent ensuite être orientés vers l'une des 3 sorties ("E", "S" ou "W"), selon l'encombrement de leurs listes d'attente.

Table 1: Elaboration du DODAG' spécifique à chacun des usagers

| Etage | Espace | Usager | Assigné à centroïde (espace) | Couche 1 (Wait list) du noeud (porte) | Relais assigné à centroïde (espace) | Couche 2 (Wait list) cumul en (porte) |
|---|---|---|---|---|---|---|
| R1 | r1w | P :13,14 | (r1w) | (r1w) | (hall R1) | (L1,e1,w1) |
| | r1m | P :15,16 | (r1m) | (r1m) | (hall R1) | (L1,e1,w1) |
| | r1e | P :17,18,19 | (r1e) | (r1e) | (hall R1) | (L1,e1,w1) |
| | t1 | Pmr :20 | (t1) | (t1) | (hall R1) | (L1) |
| | t1 | P :21 | (t1) | (t1) | (hall R1) | (L1,e1,w1) |
| | hall R1 | Pmr :12 | (hall R1) | (L1) | (stairs,lift) | (L0) |
| | hall R1 | P :22,23,24 | (hall R1) | (L1,e1,w1) | (stairs,lift) | (L0,e0,w0) |
| Rdc | r0w | P :1,2 | (r0w) | (r0w) | (hall Rdc) | (E,S,W) |
| | r0m | P :3,4 | (r0m) | (r0m) | (hall Rdc) | (E,S,W) |
| | r0e | P :5,6,7 | (r0m) | (r0e) | (hall Rdc) | (E,S,W) |
| | t0 | P :8,9 | (t0) | (t0) | (hall Rdc) | (E,S,W) |
| | hall0 | P :0,10,11 | (hall Rdc) | (E,S,W) | Evacués | Evacués |

(a) Listes d'attente aux nœuds de passage : couche (1) puis transfert à couche (2)

| Usager | Couche 1 (Wait list) du noeud (porte) | Couche 2 (Wait list) cumul en (porte) | Relais assigné à centroïde (espace) | Couche 3 (Wait list) cumul en (porte) | Relais assigné à centroïde (espace) | Couche 4 (Wait list) cumul en (porte) |
|---|---|---|---|---|---|---|
| P :13,14 | (r1w) | (L1,e1,w1) | (stairs,lift) | (L0,e0,w0) | (hall Rdc) | (E,S,W) |
| P :15,16 | (r1m) | (L1,e1,w1) | (stairs,lift) | (L0,e0,w0) | (hall Rdc) | (E,S,W) |
| P :17,18,19 | (r1e) | (L1,e1,w1) | (stairs,lift) | (L0,e0,w0) | (hall Rdc) | (E,S,W) |
| Pmr :20 | (t1) | (L1) | (lift) | (L0) | (hall Rdc) | (E,S,W) |
| P :21 | (t1) | (L1,e1,w1) | (stairs,lift) | (L0,e0,w0) | (hall Rdc) | (E,S,W) |
| Pmr :12 | (L1) | (L0) | (hall Rdc) | (E,S,W) | Evacués | Evacués |
| P :22,23,24 | (L1,e1,w1) | (L0,e0,w0) | (hall Rdc) | (E,S,W) | Evacués | Evacués |
| P :1,2 | (r0w) | (E,S,W) | Evacués | Evacués | Evacués | Evacués |
| P :3,4 | (r0m) | (E,S,W) | Evacués | Evacués | Evacués | Evacués |
| P :5,6,7 | (r0e) | (E,S,W) | Evacués | Evacués | Evacués | Evacués |
| P :8,9 | (t0) | (E,S,W) | Evacués | Evacués | Evacués | Evacués |
| P :0,10,11 | (E,S,W) | Evacués | Evacués | Evacués | Evacués | Evacués |

(b) Listes d'attente aux nœuds de passage : couches (1), (2) cumul à (3) et (4)

**Listes d'attente et évacuation guidée optimale**

A partir des DODAG's, établis pour chaque usager (voir Table 1), les listes d'attente des noeuds de passage sont alors établies depuis les noeuds les plus lointains du DAG (salles du niveau "R1") jusqu'aux noeuds cibles (portes de sorties ("E", "S", "W")) :

1. Les listes d'attente des noeuds cibles sont établies, à partir des positions des usagers présents dans le hall "R0" (usagers associés au noeud dispatcheur Nd de l'espace : "hall R0"). La couche 1 de ces listes contient alors la liste des personnes et leur position, en termes de distance pour atteindre la porte.

Pour simplifier la compréhension, un damier virtuel de maille (50cm×50cm) est projeté sur la surface des planchers. Les usagers sont placés au centre des cellules du damier.

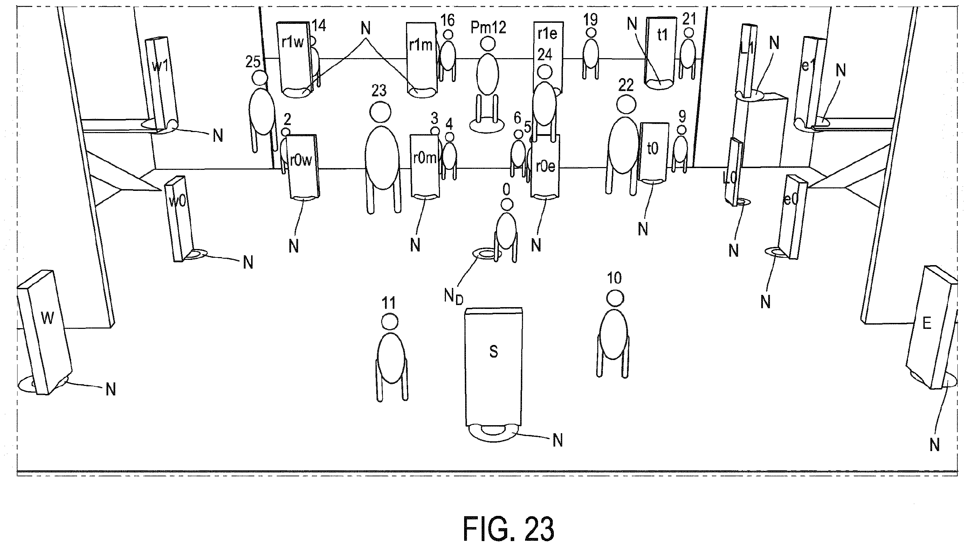

Leur distance jusqu'à la porte de sortie, peut être traduite en termes de nombre de cases séparant l'usager de la porte, afin d'en faciliter l'illustration, voir Fig. 23 :

(a) porte "E" :
*waitList(E) = [P0 : 27cases]; [P10 : 12cases]; [P11 : 20cases] (1)*

(b) porte "S"
*waitList(S) = [P0 : 18cases]; [P10 : 7cases]; [P11 : 5cases] (2)*

(c) porte "W"
*waitList(W) = [P0 : 30cases]; [P10 : 21cases]; [P11 : 13] (3)*

2. Pour les autres usagers, ils doivent d'abord pouvoir accéder au hall (« hall Rdc ») afin d'être associés ensuite au noeud centroïde du hall et pouvoir être transférés sur les liste d'attente des 3 portes de sortie (car elles sont attenantes au "hall Rdc"). En effet, ce centroïde hérite des listes d'attente des noeuds de passage attenants, à savoir les noeuds (seuils des portes) : (w0), (r0w), (r0m), (r0e), (t0), (L0) et (e0).

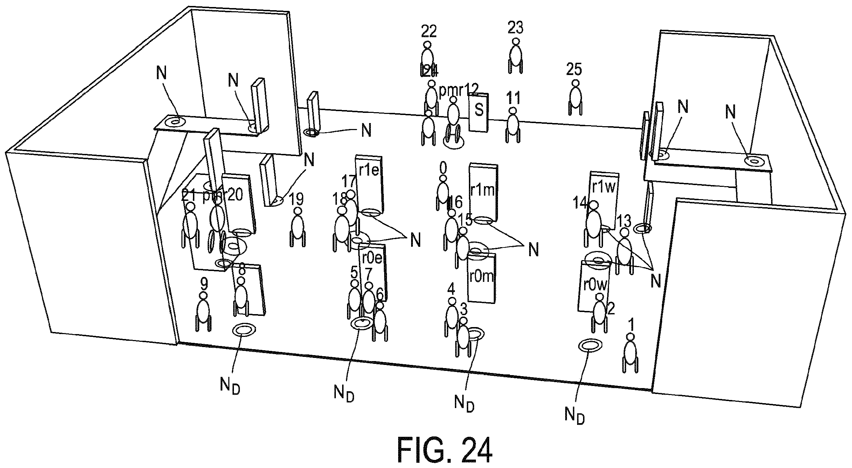

Pour les 3 portes de sortie ("E", "S", "W"), elles héritent ainsi des listes des couches supérieures (couches 2 et plus). Ces listes sont établies comme suit, voir Fig. 24 :

(a) porte "w0" : hérite de la liste d'attente du noeud de la porte (w1), depuis étage "Rdc", couche de rang immédiatement supérieur

(b) porte "r0w" :
*waitList(rOw) = [P1 : 8cases]; [P2 : 2cases] (4)*

(c) porte "r0m" :
*waitList(rOw) = [P3 : 6cases]; [P4 : 5cases] (5)*

(d) porte "r0e" :
*waitList(rOw) = [P5 : 3cases]; [P6 : 6cases]; [P7 : 3cases] (6)*

(e) porte "t0" :
*waitList(rOw) = [P8 : 0case]; [P9 : 4cases] (7)*

(f) porte "L0" : hérite de la liste d'attente du noeud de la porte (L1), depuis étage "R1", couche de rang immédiatement supérieur,

(g) porte "e0" : hérite de la liste d'attente du noeud de la porte (e1), depuis étage "R1", couche de rang immédiatement supérieur.

NOTA : Il convient de remarquer que ces listes des noeuds de passage sont transmises, par héritage, à celles des 3 portes de sortie. La distance (nombre de cases) depuis la position courante de l'usager à la porte de sortie est obtenue en ajoutant la distance entre le noeud de la porte (de la salle, exemple "r0w") à la porte de sortie (exemple, sortie "S").

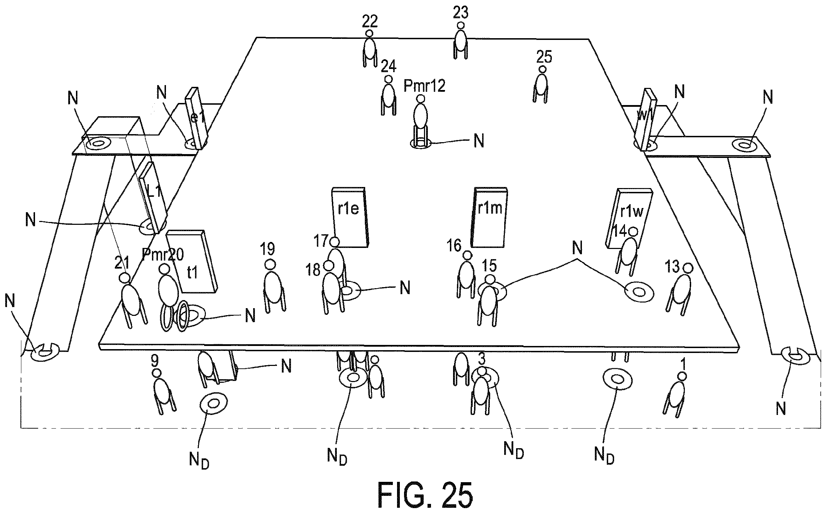

3. Partant des portes de sortie (comme niveau le plus bas en termes de couches dans les listes d'attente), les couches les plus lointaines seraient celles qui seront héritées des noeuds (seuils de porte) des salles de l'étage "R1"), voir Fig. 25 :

(a) escalier "w0" : hérite de la liste d'attente du noeud de la porte (w1), depuis étage "R1", couche de rang immédiatement supérieur

(b) porte "r1w" :

*waitList(r1 w) = [P13 : 6cases]; [P14 : 2cases] (8)*

(c) porte "r1m" :
*waitList(r1m) = [P15 : 6cases]; [P16 : 5cases] (9)*

(d) porte "r1e" :
*waitList(r1e) = [P17: 3cases]; [P18 : 5cases]; [P7 : 8cases] (10)*

(e) porte "t1" :
*waitList(t1) = [Pmr20 : 2cases]; [P21 : 4cases] (11)*

### Mise en oeuvre de l'algorithme d'optimisation des listes d'attente

Une fois les diverses listes d'attente des noeuds de passage établis, les usagers y sont rangés selon la distance aux noeuds de passages intermédiaires concernés, lesquelles listes ordonnées sont héritées de proche en proche par les noeuds de passage jusqu'à aboutir aux portes de sortie du bâtiment ou des zones de replis et abris (cas des PMR, par exemple, qui doivent rejoindre les zones qui leur sont spécialement aménagées et dédiées).

Afin de montrer la performance de l'algorithme développé et objet de la revendication de la présente invention, deux exemples sont choisis en guise d'illustration.

A cet effet, deux salles de réunion sont choisies avec deux configurations particulières, pour justifier des performances de l'algorithme développé :

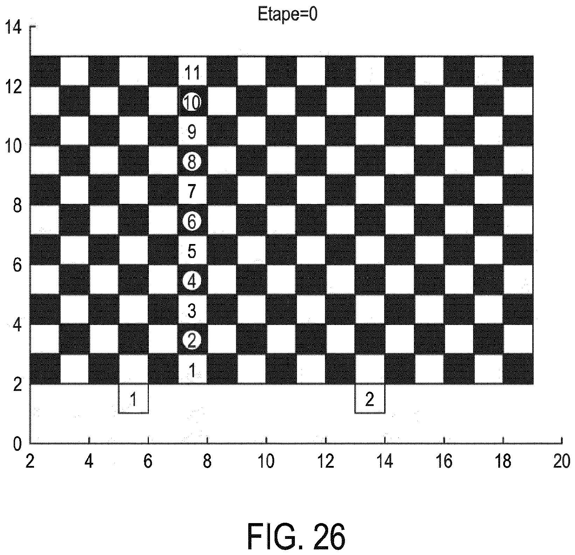

### 1. Cas d'extraction en forme de "Zip", voir Fig. 26.

(a) Par le critère de la distance la plus courte entre l'usager et les portes, ce serait la porte "1" qui accueillerait les usagers.

(b) On adopte l'hypothèse qu'il faille, en mouvement, toujours laisser une case vide entre deux usagers (éviter les chocs). On adopte aussi l'hypothèse que la vitesse de déplacement est uniforme (en général : une moyenne de 1.2 m/s, en cadence normale).

(c) Il aurait alors fallu 3 pas de temps pour évacuer la personne "P :1" puis "((1+1).10 personnes restantes" pas de temps soit un total de 23 pas (une case par pas de temps).

(d) En gérant de manière optimisée les listes d'attente des 2 portes, on réduit à 17 pas le temps d'évacuation complète, les listes d'attente étant définies comme suit, voir Fig. 26

| Usager | Porte :1 | Porte :2 |
|--------|----------|----------|
| 1 | 3 pas | 7 pas |
| 2 | 4 | 8 |
| 3 | 5 | 9 |
| 4 | 6 | 10 |
| 5 | 7 | 11 |
| 6 | 8 | 12 |
| 7 | 9 | 13 |
| 8 | 10 | 14 |
| 9 | 11 | 15 |
| 10 | 12 | 16 |
| 11 | 13 | 17 |

Il convient de rappeler que chaque usager occupera, dans la liste réordonnée de chaque porte, la position maximale entre la sienne, avant réarrangement, et la position de l'usager le précédant à laquelle sont ajoutées deux positions (devant observer une cellule vide pour éviter les chocs avec le précédent usager sur la liste). Il sera assigné à la liste où il occupera le rang le plus faible entre les deux listes.

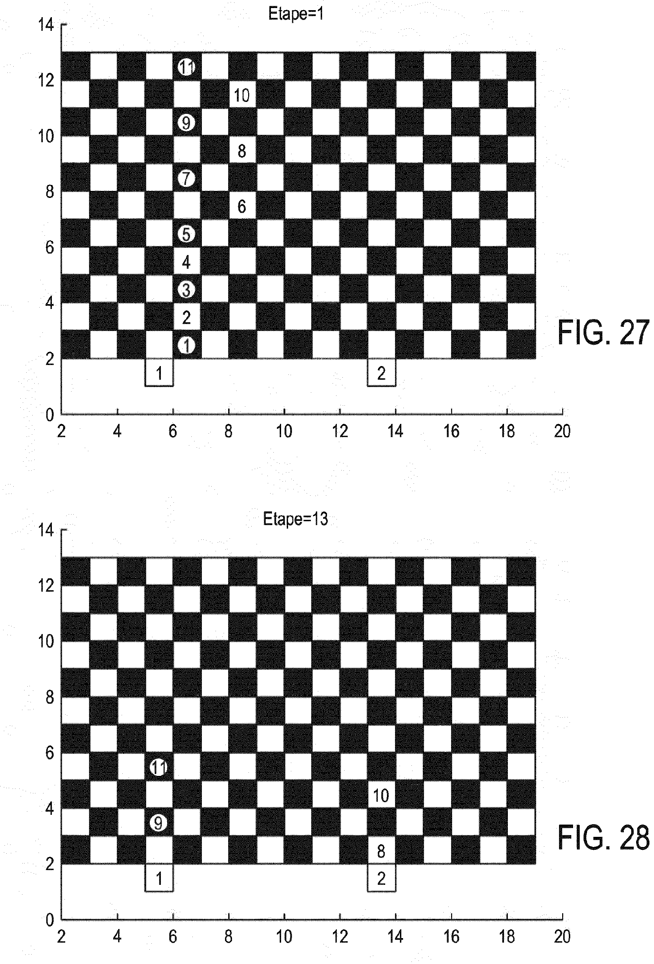

Ainsi les listes, une fois ordonnée, en tenant compte des critères (laisser un pas entre deux usagers se suivant) donnent les positions d'évacuation optimisée suivantes, voir Fig. 27 - 28 :

| Usager | Porte :1 | Porte :2 | affectation : évacuation |
|---|---|---|---|
| 1 | $\max(3,0+1)=3$ | $\max(7,0+1)=7$ | $\min(3,7)=3$ pas @porte 1 |
| 2 | $\max(4,3+2)=5$ | $\max(8,0+1)=8$ | $\min(5,8)=5$ p. @porte 1 |
| 3 | $\max(5,5+2)=7$ | $\max(9,0+1)=9$ | $\min(7,9)=7$ p. @porte 1 |
| 4 | $\max(6,7+2)=9$ | $\max(10,0+1)=10$ | $\min(9,10)=9$ p. @porte 1 |
| 5 | $\max(7,9+2)=11$ | $\max(11,0+1)=11$ | $\min(11,11)=11$ p. @porte 1 (ou 2 |
| 6 | $\max(8,11+2)=13$ | $\max(12,0+1)=12$ | $\min(13,12)=12$ p. @porte 2 |
| 7 | $\max(9,11+2)=13$ | $\max(13,12+2)=14$ | $\min(13,14)=13$ p. @porte 1 |
| 8 | $\max(10,13+2)=15$ | $\max(14,12+2)=14$ | $\min(15,14)=14$ p. @porte 2 |
| 9 | $\max(11,13+2)=15$ | $\max(15,14+2)=16$ | $\min(15,16)=15$ p. @porte 1 |
| 10 | $\max(12,15+2)=17$ | $\max(16,14+2)=16$ | $\min(17,16)=16$ p. @porte 2 |
| 11 | $\max(13,15+2)=17$ | $\max(17,16+2)=18$ | $\min(17,18)=17$ p. @porte 1' |

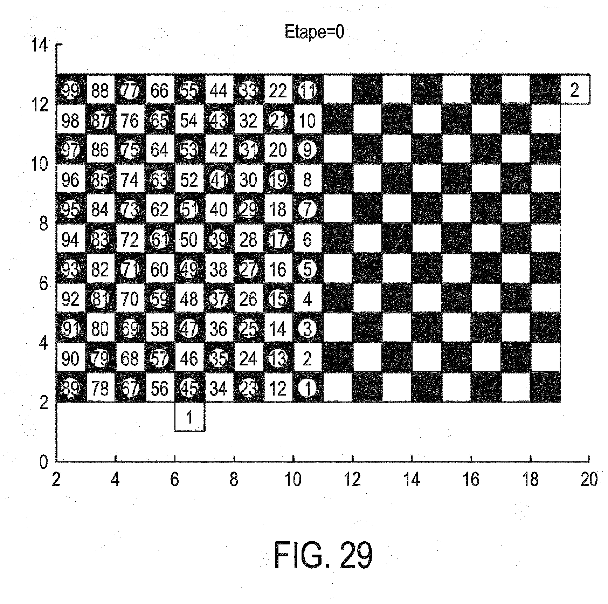

**2. Cas d'extraction dans le cas d'une salle densément occupée (99 personnes) et ayant 2 portes, voir Fig. 29**

(a) Par le critère de la distance la plus courte entre l'usager et les portes, on dénombrerait 89 usagers assignés à la porte "1", 6 usagers assignés à la porte "2", 4 usagers étant à égale distance des deux portes.

(b) On adopte l'hypothèse qu'il faille, en mouvement, toujours laisser une case vide entre deux usagers (éviter les chocs). On adopte aussi l'hypothèse que la vitesse de déplacement est uniforme (en général : une moyenne de 1.2 m/s, en cadence normale).

(c) Il aurait fallu alors, au minimum, 177 pas de temps pour évacuer entièrement la salle : 1 pas pour la personne "P45" et ((1+1) pas pour les 88 autres usagers les plus proches de la porte "1" que de la porte "2").

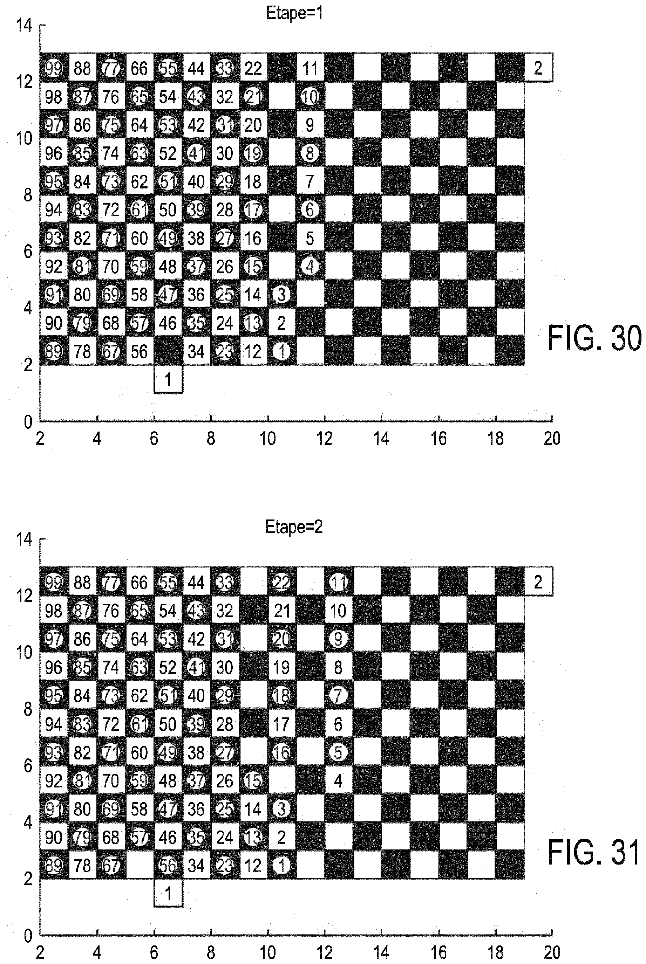

(d) En gérant de manière optimisée les listes d'attente des 2 portes, on réduit à 103 pas le temps d'évacuation complète, les listes d'attente étant d'abord constituées puis gérées de manière similaire à celle explicitée dans le cas du dégagement en forme de "Zip". Quelques positions, en des instants arbitrairement choisis, sont illustrées par Fig. 30 -31.

**Bibliographie**

E. Cetin, K. Dimitropoulos, B. Gouverneur, N. Grammalidis, O. Gunay, Y. H. Habiboglu, B. U. Toreyin, and S. Verstockt, "Vidéo fire détection: a review," Digital Signal Processing, vol. 23, no. 6, pp. 1827- 1843, 2013.

S. Cosar, G. Donatiello, V. Bogorny, C. Garate, L. Alvares, F. Bremond. Towards Abnormal Trajectory and Event Détection in Video Surveillance. IEEE Transactions on Circuits and Systems for Video Technology, 2016.

J. Fonollosa, A. Solórzano, S. Marco, Chemical Sensor Systems and Associated Algorithms for Fire Détection: A Review, Sensors, Volume: 18, 2018.

C. Jorgensen and S. Powell, Solving 0-1 Minimax Problems, in The Journal of the Operational Research Society Vol. 38, No. 6 (Jun., 1987), pp. 515-522.

Omprakash Gnawali and Philip Levis. The ETX Objective Function for RPL, draft-gnawali-roll-etxof-00, IETF, 2010.

Omprakash Gnawali and Philip Levis. The Minimum Rank with Hystérésis Objective Function. RFC 6719. RFC Editor, 2012.

H. Wang, A. Klaser, C. Schmid, and C.-L. Liu, "Action récognition by dense trajectories," in Computer Vision and Pattern Recognition (CVPR), 2011 IEEE Conférence on, June 2011, pp. 3169-3176.

**Revendications**

1. Procédé de localisation d'utilisateurs et de guidage actualisé des déplacements des utilisateurs dans un bâtiment, qui présente des espaces délimités par des obstacles aux déplacements des utilisateurs, ledit guidage actualisé étant réalisé en fonction d'un événement dans le bâtiment, suivant des chemins menant vers un ou plusieurs lieux cibles donnés ("E", "S", "W"),

le guidage étant adapté à chaque utilisateur,
avec des objets connectés (T, T') en liaison de communication sans fil avec un serveur des ressources à distance qui est un serveur de contrôle (S) accessible par un réseau de communication, via au moins une borne (B) de communication,
comprenant les étapes suivantes :

i- à partir d'une maquette numérique du bâtiment (BIM, CIM),

- des moyens de calcul (M) reliés au serveur de contrôle (S) calculent, de manière automatique, des noeuds, les noeuds se répartissant entre des noeuds dispatcheurs (Nd) ; et des noeuds de passage (N), les noeuds de passage (N) étant des points d'un chemin devant être emprunté par les utilisateurs pour se déplacer vers un ou divers lieux cibles donnés ("E", "S", "W"), les noeuds de passage (N) étant associés chacun à un noeud dispatcheur (Nd) ;
- les moyens de calcul (M) calculent, de manière automatique, des arêtes (A), chaque arête reliant deux noeuds (N, Nd) successifs en traversant les espaces sans rencontrer les obstacles ;
- les moyens de calcul (M) reliés au serveur de contrôle (S) assignent, à chaque noeud de passage, une liste d'attente d'utilisateurs, actualisée ; à partir des profils d'utilisateurs, chaque profil d'utilisateurs déterminant des noeuds et arêtes, spécifiques à chaque profil, par lesquels peuvent se déplacer les utilisateurs ;
- les moyens de calcul (M) calculent automatiquement, en tenant compte des obstacles, un graphe orienté acyclique (DAG) de déplacement vers le ou les lieux cibles, constitué avec les noeuds (N, Nd) et les arêtes (A),

ii- des capteurs (C) détectent un événement automatiquement, semi-automatiquement ou manuellement, et sa localisation réelle dans le bâtiment, que l'on stocke sur le serveur de contrôle (S) ;
iii- les moyens de calcul (M) calculent la position réelle de chaque utilisateur situé dans le bâtiment, avec pour les espaces fermés, la mesure de la puissance du signal de réception d'un objet connecté donné de l'utilisateur, réalisée par une liaison de communication sans fil à la ou les bornes (B) d'accès de communication en liaison de communication avec le serveur de contrôle (S), la ou les bornes (B) de communication ayant une position identifiée dans la maquette numérique (BIM, CIM) ;
iv- en fonction de la nature de l'évènement, qui entraine l'inaccessibilité de certains noeuds (N, Nd) du graphe orienté acyclique (DAG), les moyens de calcul (M) calculent un graphe orienté acyclique dit 'actualisé' (DAG') de déplacement vers le ou les lieux cibles ("E", "S", "W");
v- les moyens de calcul (M) transposent les positions réelles des utilisateurs dans la maquette numérique et calculent le noeud dispatcheur (Nd) associé à chaque utilisateur et situé le plus près de l'utilisateur ;
vi- à partir du graphe orienté acyclique actualisé (DAG') et du noeud dispatcheur (Nd) associé à chaque utilisateur, les moyens de calcul (M) calculent un sous-graphe associé (DODAG') par utilisateur qui correspond au chemin personnalisé à chaque utilisateur vers un lieu cible donné ("E", "S", "W"),

le sous-graphe associé (DODAG') par utilisateur étant calculé à l'aide :

- d'une « fonction objectif individuelle » pour chaque noeud dispatcheur (Nd), basée sur le profil de l'utilisateur, construite pour :

• attribuer à chaque utilisateur, et actualiser tous ses noeuds de passage (N) associés au noeud dispatcheur (Nd), à proximité duquel se trouve chaque utilisateur,
• constituer et actualiser des listes d'attente de chaque noeud de passage (N) associé au noeud dispatcheur (Nd), pour l'utilisateur,
• constituer et actualiser des listes d'attente de chaque noeud de passage (N) pour l'utilisateur dans l'ensemble du bâtiment,

permettant d'obtenir un ou plusieurs sous-graphes associés (DODAG') par utilisateur,
- d'une «fonction objectif générale» construite à partir des «fonctions objectif individuelles» de tous les utilisateurs,

qui présente en entrée les listes d'attente de l'ensemble de chaque noeud de passage (N) de l'ensemble du bâtiment de tous les utilisateurs, et en sortie les sous-graphes (DODAG') associés de tous les utilisateurs,
la « fonction objectif générale » délivrant à chaque utilisateur son sous-graphe (DODAG') calculé pour optimiser l'ensemble des « fonctions objectif individuelles » de tous les utilisateurs, par rapport à des paramètres d'entrée,

et les moyens de calcul (M) réitèrent les étapes précédentes ii à vi, pour actualiser le guidage spatialement et temporellement, de chaque utilisateur,
à une fréquence temporelle donnée et adaptée à l'évènement,

vii- les moyens de calcul (M) guident chaque utilisateur via son objet connecté (T) ou des objets connectés (T') du bâtiment, à suivre son sous-graphe (DODAG') associé, vers un lieu cible donné ("E", "S", "W").

2. Procédé selon la revendication précédente, dans lequel les obstacles comprennent des parois et murs mais aussi des objets ou autres obstructions aux passages des utilisateurs, et/ou apparaissent lors des évènements.

3. Procédé selon l'une des revendications précédentes, dans lequel l'optimisation de la « fonction objectif générale » est réalisée avec l'une des stratégies suivantes :

   - linéaire ;
   - MRHOF ;
   - ETXOF;
   - stratégie min max ;
   - logique floue.

4. Procédé selon l'une des revendications 1 à 3, dans lequel les profils des utilisateurs comportent les informations suivantes, en vue de calculer le DODAG' personnalisé :

   - catégorie de mobilité : telle que personne à Mobilité Réduite, enfant ;
   - l'âge de l'utilisateur ;
   - présence d'autres utilisateurs spécifiques ;
   - profils différenciés.

5. Procédé selon la revendication précédente 4, dans lequel les paramètres d'entrée sont un temps et/ou une distance de parcours des utilisateurs vers le ou les lieux cibles ("E", "S", "W").

6. Procédé selon l'une des revendications précédentes, dans lequel l'événement est une urgence et le procédé permet d'évacuer les utilisateurs vers les lieux cibles ("E", "S", "W") qui sont des sorties du bâtiment ou des zones de replis et abris

7. Procédé selon l'une des revendications précédentes, dans lequel l'événement est dit normal et le procédé permet d'acheminer les utilisateurs vers les lieux cibles ("E", "S", "W").

8. Procédé selon l'une des revendications précédentes, dans lequel dans l'étape ii, les moyens de calcul (M) déterminent la nature de l'événement et sa localisation réelle dans le bâtiment :

   a) automatiquement par des algorithmes et/ou
   b) manuellement par entrée d'informations des utilisateurs qui sont envoyées au serveur de contrôle (S), afin de déterminer, dans le graphe orienté acyclique (DAG), les noeuds (N) les plus proches de l'évènement.

9. Procédé selon l'une des revendications précédentes, dans lequel le bâtiment présente plusieurs étages, et dans l'étape vi les moyens de calcul (M) calculent, à partir de chaque noeud de passage (N), un sous-graphe DODAG' dans tous les étages connectés entre eux via les noeuds de passage (N) inter-étages pour constituer le DAG global pour traiter toute position dans le bâtiment.

10. Procédé selon l'une des revendications précédentes, dans lequel dans l'étape ii, dans une étape d'apprentissage, les moyens de calcul (M) recueillent la puissance du signal de réception de l'objet connecté situé à des positions connues dans le bâtiment en fonction de bornes (B) de communication sans fil, et exploitent la relation puissance du signal de réception et position dans le bâtiment pour localiser l'utilisateur.

11. Procédé selon l'une des revendications précédentes, dans lequel les interfaces/signaux personnalisés de l'étape vii sont :

- des images sur écran,
- par réalité virtuelle et augmentée, et/ou
- indication sonore, vibrations directionnelles sur bracelets ou cannes, guidage par agent ou signaux lumineux, drones.

12. Procédé selon l'une des revendications précédentes, dans lequel les interfaces/signaux personnalisés de l'étape vii sont réalisés sur les objets connectés (T) embarqués de chaque utilisateur qui sont destinés à la localisation individualisée et au guidage individualisé de chaque utilisateur.

13. Dispositif de localisation d'utilisateurs et de guidage des déplacements des utilisateurs dans un bâtiment qui présente des espaces délimités par des obstacles aux déplacements des utilisateurs,

ledit guidage étant réalisé en fonction d'un événement dans le bâtiment, suivant des chemins menant vers un ou plusieurs lieux cibles donnés ("E", "S", "W"),
le guidage étant adapté à chaque utilisateur,
qui présente :

- un serveur des ressources à distance qui est un serveur de contrôle (S) accessible par un réseau de communication ;
- des capteurs (C) reliés au serveur de contrôle (S) pour détecter un événement, et sa localisation réelle dans le bâtiment, que l'on stocke sur le serveur de contrôle (S) ;
- au moins une borne (B) de communication en liaison de communication avec le serveur de contrôle (S),
- des objets connectés (T) des utilisateurs, en liaison de communication sans fil avec le serveur de contrôle (S) par la ou les bornes (B) de communication,
- des moyens de calcul (M) reliés au serveur de contrôle (S) qui sont configurés pour :

i- à partir d'une maquette numérique du bâtiment (BIM, CIM),

- calculer des noeuds (N) se répartissant entre : des noeuds dispatcheurs ($N_d$) ; et des noeuds de passage, les noeuds de passage étant des points du chemin devant être empruntés par les utilisateurs pour se déplacer vers le ou les divers lieux cibles donnés ("E", "S", "W") en évitant les obstacles ;
- calculer des arêtes (A), chaque arête reliant deux noeuds (N) successifs en traversant les espaces sans rencontrer les obstacles
- assigner, à chaque noeud de passage, une liste d'attente d'utilisateurs, à partir de profils d'utilisateurs, chaque profil d'utilisateurs déterminant des noeuds et arêtes par lesquels peuvent se déplacer les utilisateurs, ;
- calculer automatiquement un graphe orienté acyclique (DAG) de déplacement vers les lieux cibles, constitué avec les noeuds (N, Nd) et les arêtes (A), et spécifique à chaque profil d'utilisateur,

ii+iii- calculer la position réelle de chaque utilisateur situé dans le bâtiment, avec pour les espaces fermés une mesure de la puissance du signal de réception de l'objet connecté donné de l'utilisateur, réalisée par une liaison de communication sans fil à une ou plusieurs bornes (B) d'accès de communication, la ou les bornes (B) d'accès ayant une position identifiée dans la maquette numérique du bâtiment (BIM, CIM) ;
iv- calculer le graphe orienté acyclique dit 'actualisé' (DAG') de déplacement vers les lieux cibles en fonction d'une nature de l'évènement qui entraine l'inaccessibilité de certains noeuds du graphe orienté acyclique (DAG) ;
v- transposer les positions réelles des utilisateurs dans la maquette numérique et calculer le noeud dispatcheur ($N_d$) associé à chaque utilisateur et situé le plus près de l'utilisateur ;

vi- calculer pour chaque utilisateur un sous-graphe associé (DODAG') qui correspond à un chemin personnalisé à chaque utilisateur vers un lieu cible donné ("E", "S", "W"), à partir du graphe orienté acyclique actualisé, et du noeud dispatcheur (Nd) associé à chaque utilisateur,

le sous-graphe (DODAG') qui correspond au chemin personnalisé à chaque utilisateur vers un lieu cible donné ("E", "S", "W"), étant calculé à l'aide :

- d'une «fonction objectif individuelle» pour chaque noeud dispatcheur (Nd), basée sur le profil de l'utilisateur, construite pour :

• attribuer à chaque utilisateur, et actualiser tous ses noeuds de passage associés au noeud dispatcheur (Nd), à proximité duquel se trouve chaque utilisateur,
• constituer et actualiser pour l'utilisateur des listes d'attente de chaque noeud de passage (N) associé au noeud dispatcheur (Nd),
• constituer et actualiser des listes d'attente de chaque noeud de passage (N) pour l'utilisateur dans l'ensemble du bâtiment,

- d'une «fonction objectif générale» construite à partir des «fonctions objectif individuelles» de tous les utilisateurs,

qui présente en entrée les listes d'attente des utilisateurs de l'ensemble de chaque noeud de passage (N) de l'ensemble du bâtiment, et en sortie les sous-graphes (DODAG') de tous les utilisateurs,

la «fonction objectif générale» délivrant à chaque utilisateur son sous-graphe (DODAG') calculé pour optimiser l'ensemble des « fonctions objectif individuelles », de tous les utilisateurs ;

vii- réitérer les étapes suivantes ii à vi, afin d'actualiser spatialement et temporellement le guidage, à une fréquence temporelle donnée et adaptée à l'évènement, les objets connectés (T) des utilisateurs ou des objets connectés (T') localisés dans le bâtiment guidant chaque utilisateur à suivre son sous-graphe (DODAG') associé, vers un lieu cible donné ("E", "S", "W").

**14.** Dispositif (D) selon la revendications 13, dans lequel :

- les noeuds dispatcheurs ($N_d$) sont des points centroïdes dans un espace comprenant une salle, hall, couloir ;
- les noeuds de passage (N) sont des portes, entrées et sorties d'ascenseur, points hauts et bas de rampes ou d'escaliers (ou escalators, tapis roulants ou cabines mobiles, etc).

**15.** Dispositif (D) selon l'une des revendications 13 ou 14, dans lequel les objets connectés (T, T') sont choisis parmi la liste suivante :

- Smartphone,
- Canne connectée,
- Fauteuil roulant connecté,
- Tablette,
- Ecran connecté,
- Lunette connectée,
- Bracelet connecté,
- Capteur connecté lumineux,
- Dispositifs de communication pour les agents de sécurité/d'évacuation,
- Robot connecté,
- Drone connecté.

**16.** Dispositif (D) selon l'une des revendications 13 à 15, dans lequel les bornes (B) de communication sans fil sont fixes et/ou mobiles, et sont des bornes (B) de communication Wifi.

**Patentansprüche**

**1.** Verfahren zur Lokalisierung von Benutzern und zur aktualisierten Führung von Benutzerbewegungen in einem Gebäude, das Räume aufweist, die durch Hindernisse für Benutzerbewegungen begrenzt sind, wobei die aktualisierte Führung in Abhängigkeit von einem Ereignis im Gebäude durchgeführt wird, den Wegen folgend, die zu einem oder mehreren bestimmten Zielorten ("E", "S", "W") leiten, wobei die Führung auf jeden Benutzer abgestimmt ist,

mit vernetzten Objekten (T, T') in drahtloser Kommunikationsverbindung mit einem Remote-Ressourcenserver, der ein Steuerungsserver (S) ist, auf den über ein Kommunikationsnetzwerk über mindestens einen Kommunikationsanschluss (B) zugegriffen werden kann,
die folgenden Schritte umfassend:

i- ausgehend von einem digitalen Modell des Gebäudes (BIM, CIM),

- Berechnungsmittel (M), die mit dem Steuerungsserver (S) verbunden sind, und auf automatische Weise Knoten berechnen, wobei sich die Knoten aus Verteilungsknoten (Nd); und Durchgangsknoten (N) zusammensetzen, wobei Durchgangsknoten (N) Punkte auf einem Pfad sind, den Benutzer beschreiten müssen, um sich zu einem oder verschiedenen bestimmten Zielorten ("E", "S", "W") zu bewegen, wobei die Durchgangsknoten (N) jeweils einem Verteilungsknoten (Nd) zugeordnet sind;
- die Berechnungsmittel (M), die auf automatische Weise die Kanten (A) berechnen, wobei jede Kante zwei aufeinanderfolgende Knoten (N, Nd) verbindet, indem sie die Räume durchquert, ohne auf Hindernisse zu stoßen;
- die Berechnungsmittel (M), die mit dem Steuerungsserver (S) verbundenen sind, und jedem Durchgangsknoten eine aktualisierte Benutzerwarteliste zuweisen; ausgehend von den Benutzerprofilen, wobei jedes Benutzerprofil Knoten und Kanten bestimmt, die spezifisch für jedes Profil sind, durch das sich die Benutzer bewegen können;
- die Berechnungsmittel (M), die automatisch unter Berücksichtigung von Hindernissen einen gerichteten azyklischen Graphen (DAG) der Bewegung zu dem oder den Zielorten berechnen, bestehend aus den Knoten (N, Nd) und den Kanten (A),

ii- Sensoren (C), die ein Ereignis automatisch, halbautomatisch oder manuell erfassen, und seine tatsächliche Lokalisierung im Gebäude, die auf dem Steuerungsserver (S) gespeichert wird;
iii- die Berechnungsmittel (M), die die tatsächliche Position jedes Benutzers, der sich im Gebäude befindet, berechnen,
mit, für geschlossene Räume, der Messung der Stärke des Empfangssignals eines bestimmten vernetzten Objekts des Benutzers, die durch eine drahtlose Kommunikationsverbindung zu der oder den Kommunikationszugangsanschlüssen (B) in Kommunikationsverbindung mit dem Steuerungsserver (S) durchgeführt wird, wobei der oder die Kommunikationsanschlüsse (B) eine im digitalen Modell (BIM, CIM) identifizierte Position haben;
iv- in Abhängigkeit von der Art des Ereignisses, das die Unzugänglichkeit bestimmter Knoten (N, Nd) des gerichteten azyklischen Graphen (DAG) auslöst, die Berechnungsmittel (M) berechnen einen gerichteten azyklischen Graphen, "aktualisiert" genannt (DAG), der Bewegung zu den Zielorten ("E", "S", "W");
v- die Berechnungsmittel (M) transponieren die tatsächlichen Positionen der Benutzer in das digitale Modell und berechnen den Verteilungsknoten (Nd), der jedem Benutzer zugeordnet ist und sich dem Benutzer am nächsten befindet;
vi- ausgehend vom aktualisierten gerichteten azyklischen Graphen (DAG') und dem Verteilungsknoten (Nd), der jedem Benutzer zugeordnet ist, die Berechnungsmittel (M) berechnen einen pro Benutzer zugeordneten Teilgraphen (DODAG'), der dem Pfad entspricht, der personalisiert ist für jeden Benutzer, zu einem bestimmten Zielort ("E", "S", "W"),
der pro Benutzer zugeordnete Teilgraph (DODAG') wird berechnet mit Hilfe von:

- einer "Funktion individuelles Ziel" für jeden Verteilungsknoten (Nd), basierend auf dem Benutzerprofil, erstellt zum:

• Vergeben, an jeden Benutzer, und Aktualisieren aller Durchgangsknoten (N), die dem Verteilungsknoten (Nd) zugeordnet sind, in dessen Nähe sich jeder Benutzer befindet,
• Bilden und Aktualisieren von Wartelisten für jeden Durchgangsknoten (N) für den Benutzer, der dem Verteilungsknoten (Nd) zugeordnet ist,
• Bilden und Aktualisieren von Wartelisten für jeden Durchgangsknoten (N) für den Benutzer in der Gesamtheit des Gebäudes,

wodurch ein oder mehrere zugeordnete Teilgraphen (DODAG') pro Benutzer erhalten werden können,
- einer "Funktion allgemeines Ziel", die ausgehend von den "Funktionen individuelles Ziel" aller Benutzer erstellt wird,

die als Eingabe die Wartelisten der Gesamtheit jedes Durchgangsknotens (N) der Gesamtheit des Gebäudes aller Benutzer aufweist, und als Ausgabe die zugeordneten Teilgraphen (DODAG') aller Benutzer,
wobei die "Funktion allgemeines Ziel", jedem Benutzer seinen Teilgraphen (DODAG') liefert, der berechnet wird, um die Gesamtheit der "Funktionen individuelles Ziel" aller Benutzer in Bezug auf die Eingabeparameter zu optimieren,
und die Berechnungsmittel (M) wiederholen die vorhergehenden Schritte ii bis vi, um die räumliche und zeitliche Führung jedes Benutzers mit einer bestimmten und mit dem Ereignis abgestimmten zeitlichen Häufigkeit zu aktualisieren,

vii- die Berechnungsmittel (M) führen jeden Benutzer über sein vernetztes Objekt (T) oder vernetzte Objekte (T') des Gebäudes, um seinem zugeordneten Teilgraphen (DODAG') zu einem bestimmten Zielort ("E", "S", "W") zu folgen.

2. Verfahren nach dem vorhergehenden Anspruch, wobei die Hindernisse Wände und Mauern umfassen, aber auch Objekte oder andere Hindernisse für den Durchgang der Benutzer und/oder die bei Ereignissen auftreten.

3. Verfahren nach einem der vorhergehenden Ansprüche, wobei die Optimierung der "Funktion allgemeines Ziel" mit einer der folgenden Strategien durchgeführt wird:

- linear;
- MRHOF;
- ETXOF;
- minimax Strategie;
- Fuzzylogik.

4. Verfahren nach einem der Ansprüche 1 bis 3, wobei die Benutzerprofile die folgenden Informationen beinhalten, um den personalisierten DODAG' zu berechnen:

- Kategorie der Mobilität: zum Beispiel eine Person mit eingeschränkter Mobilität, Kind;
- Alter des Benutzers;
- Anwesenheit anderer spezifischer Benutzer;
- differenzierte Profile.

5. Verfahren nach dem vorhergehenden Anspruch 4, wobei die Eingabeparameter eine Zeit und/oder Entfernung der Strecke des Benutzers zu dem oder den Zielorten ("E", "S", "W") sind.

6. Verfahren nach einem der vorhergehenden Ansprüche, wobei das Ereignis ein Notfall ist und das Verfahren die Evakuierung der Benutzer zu den Zielorten ("E", "S", "W") ermöglicht, die Gebäudeausgänge oder Zuflucht- und Schutzzonen sind.

7. Verfahren nach einem der vorhergehenden Ansprüche, wobei das Ereignis als normal bezeichnet wird und das Verfahren es ermöglicht, die Benutzer zu den Zielorten ("E", "S", "W") zu leiten.

8. Verfahren nach einem der vorhergehenden Ansprüche, wobei in Schritt ii die Berechnungsmittel (M) die Art des Ereignisses und seine tatsächliche Lokalisierung im Gebäude bestimmen:

a) automatisch durch Algorithmen und/oder
b) manuell durch Eingabe von Benutzerinformationen, die an den Steuerungsserver (S) gesendet werden, um im gerichteten azyklischen Graphen (DAG) die Knoten (N) zu bestimmen, die dem Ereignis am nächsten sind.

9. Verfahren nach einem der vorhergehenden Ansprüche, wobei das Gebäude mehrere Geschosse aufweist, und in Schritt vi die Berechnungsmittel (M) ausgehend von jedem Durchgangsknoten (N) einen Teilgraphen DODAG' in allen Geschossen berechnen, die über die zwischengeschossigen Durchgangsknoten (N) miteinander vernetzt sind, um den globalen DAG zu bilden, um jede Position im Gebäude zu verarbeiten.

10. Verfahren nach einem der vorhergehenden Ansprüche, wobei in Schritt ii, in einem Lernschritt, die Berechnungsmittel (M) die Stärke des Empfangssignals des vernetzten Objekts erfassen, das sich an bekannten Positionen im Gebäude in Abhängigkeit von drahtlosen Kommunikationsanschlüsse (B) befindet, und das Verhältnis von Empfangssignalstärke und Position im Gebäude ausnutzen, um den Benutzer zu lokalisieren.

11. Verfahren nach einem der vorhergehenden Ansprüche, wobei die personalisierten Schnittstellen/Signale von Schritt vii sind:

- Bilder auf dem Bildschirm,
- durch virtuelle und erweiterte Realität und/oder
- Angaben von Ton, Richtungsvibrationen an Armbändern oder Stöcken, Führung durch Beauftragte oder Lichtsignale, Drohnen.

12. Verfahren nach einem der vorhergehenden Ansprüche, wobei die personalisierten Schnittstellen/Signale von Schritt vii auf den eingebetteten vernetzten Objekten (T) jedes Benutzers durchgeführt werden, die für die individuelle Lokalisierung und individuelle Führung jedes Benutzers bestimmt sind.

13. Vorrichtung zur Lokalisierung von Benutzern und zur Führung von Bewegungen von Benutzern in einem Gebäude, das Räume aufweist, die durch Hindernisse für Benutzerbewegungen begrenzt sind,

wobei die Führung in Abhängigkeit von einem Ereignis im Gebäude durchgeführt wird, den Wegen folgend, die zu einem oder mehreren bestimmten Zielorten ("E", "S", "W") leiten, wobei die Führung auf jeden Benutzer abgestimmt ist,
die aufweist:

- einen Remote-Ressourcenserver, der ein Steuerungsserver (S) ist, auf den über ein Kommunikationsnetzwerk zugegriffen werden kann;
- Sensoren (C), die mit dem Steuerungsserver (S) verbunden sind, um ein Ereignis und seine tatsächliche Lokalisierung im Gebäude zu erfassen, die auf dem Steuerungsserver (S) gespeichert werden;
- mindestens einen Kommunikationsanschluss (B) in Kommunikationsverbindung mit dem Steuerungsserver (S);
- vernetzte Objekte (T) der Benutzer in drahtloser Kommunikationsverbindung mit dem Steuerungsserver (S) über den oder die Kommunikationsanschlüsse (B);
- Berechnungsmittel (M), die mit dem Steuerungsserver (S) verbunden sind, die konfiguriert sind zum:

i- ausgehend von einem digitalen Modell des Gebäudes (BIM, CIM),

- Berechnen von Knoten (N), die sich zusammensetzen aus: Verteilungsknoten ($N_d$); und Durchgangsknoten, wobei die Durchgangsknoten Punkte auf dem Pfad sind, den Benutzer beschreiten müssen, um sich zu dem oder den verschiedenen bestimmten Zielorten ("E", "S", "W") zu bewegen, wobei Hindernisse vermieden werden;
- Berechnen von Kanten (A), wobei jede Kante zwei aufeinanderfolgende Knoten (N) verbindet, indem sie die Räume durchquert, ohne auf Hindernisse zu stoßen;
- Zuweisen, an jeden Durchgangsknoten, einer Benutzerwarteliste ausgehend von Benutzerprofilen, wobei jedes Benutzerprofil Knoten und Kanten bestimmt, durch die sich Benutzer bewegen können;
- automatisches Berechnen eines gerichteten azyklischen Graphen (DAG) der Bewegung zu den Zielorten, aus Knoten (N, Nd) und Kanten (A) gebildet, und spezifisch für jedes Benutzerprofil,

ii + iii- Berechnen der tatsächlichen Position jedes Benutzers, der sich im Gebäude befindet, mit, für geschlossene Räume, einer Messung der Stärke des Empfangssignals des bestimmten vernetzten Objekts des Benutzers, die über eine drahtlose Kommunikationsverbindung mit einem oder mehreren Kommunikationszugangsanschlüssen (B) durchgeführt wird, wobei der oder die Zugangsanschlüsse (B) eine im digitalen Modell (BIM, CIM) identifizierte Position haben;
iv- Berechnen des gerichteten azyklischen Graphen, "aktualisiert" genannt (DAG'), der Bewegung zu den Zielorten, in Abhängigkeit von der Art des Ereignisses, das die Unzugänglichkeit bestimmter Knoten des gerichteten azyklischen Graphen (DAG) auslöst;

v- Transponieren der tatsächlichen Positionen der Benutzer in das digitale Modell und Berechnen des Verteilungsknotens ($N_d$), der jedem Benutzer zugeordnet ist und sich dem Benutzer am nächsten befindet;

vi- Berechnen für jeden Benutzer eines zugeordneten Teilgraphen (DODAG'), der einem personalisierten Pfad jedes Benutzer zu einem bestimmten Zielort "("E", "S", "W") entspricht, ausgehend vom aktualisierten gerichteten azyklischen Graphen und dem Verteilungsknoten (Nd), der jedem Benutzer zugeordnet ist,

wobei der Teilgraph (DODAG'), der dem personalisierten Pfad für jeden Benutzer zu einem bestimmten Zielort ("E", "S", "W") entspricht, berechnet wird mit Hilfe von:

- einer "Funktion individuelles Ziel" für jeden Verteilungsknoten (Nd), basierend auf dem Benutzerprofil, erstellt zum:

    • Vergeben, an jeden Benutzer, und Aktualisieren aller Durchgangsknoten, die dem Verteilungsknoten (Nd) zugeordnet sind, in dessen Nähe sich jeder Benutzer befindet,
    • Bilden und Aktualisieren, für den Benutzer der Wartelisten, jedes Durchgangsknotens (N), der dem Verteilungsknoten (Nd) zugeordnet ist,
    • Bilden und Aktualisieren von Wartelisten jedes Durchgangsknotens (N) für den Benutzer in der Gesamtheit des Gebäudes,

- einer "Funktion allgemeines Ziel", die ausgehend von den "Funktionen individuelles Ziel" aller Benutzer erstellt wird,

und als Eingabe die Wartelisten der Benutzer der Gesamtheit jedes Durchgangsknotens (N) der Gesamtheit des Gebäudes aufweist, und als Ausgabe die Teilgraphen (DODAG') aller Benutzer,
wobei die "Funktion allgemeines Ziel" jedem Benutzer seinen berechneten Teilgraphen (DODAG') liefert, um die Gesamtheit der "Funktionen individuelles Ziel" aller Benutzer zu optimieren;
vii- Wiederholen der folgenden Schritte ii bis vi, um die Führung räumlich und zeitlich zu aktualisieren, mit einer bestimmten zeitlichen Häufigkeit, die mit dem Ereignis abgestimmt ist, wobei die vernetzten Objekte (T) der Benutzer oder die vernetzten Objekte (T'), die im Gebäude lokalisiert sind, jeden Benutzer anleiten, seinem zugeordneten Teilgraphen (DODAG') zu einem bestimmten Zielort ("E", "S", "W") zu folgen.

14. Vorrichtung (D) nach Anspruch 13, wobei:

- die Verteilungsknoten ($N_d$) Schwerpunkte in einem Raum sind, der einen Saal, eine Halle, und einen Korridor umfasst;
- die Durchgangsknoten (N) Türen, Aufzugseingänge und - ausgänge, und Höhen- und Tiefenpunkte von Rampen oder Treppen (oder Rolltreppen, Laufbänder oder mobile Kabinen usw.) sind.

15. Vorrichtung (D) nach einem der Ansprüche 13 oder 14, wobei die vernetzten Objekte (T, T') aus der folgenden Liste ausgewählt sind:

    - Smartphone,
    - vernetzter Stock,
    - vernetzter Rollstuhl,
    - Tablet,
    - vernetzter Bildschirm,
    - vernetzte Brille,
    - vernetztes Armband,
    - vernetzter Lichtsensor,
    - Kommunikationsvorrichtungen für Sicherheits-/Evakuierungsbeauftragte,
    - vernetzter Roboter,
    - vernetzte Drohne.

16. Vorrichtung (D) nach einem der Ansprüche 13 bis 15, wobei die drahtlosen Kommunikationsanschlüsse (B) fest und/oder mobil sind und WiFi-Kommunikationsanschlüsse (B) sind.

**Claims**

1. A method for locating users and for updated guiding of the movements of the users in a building, which has spaces delimited by obstacles to user movements, said updated guiding being carried out depending on an event in the building, following paths leading to one or more given target places ("E", "S", "W"),

the guiding being adapted to each user,
with connected objects (T, T') in wireless communication link with a remote resource server which is a control server (S) accessible by a communication network, via at least one communication terminal (B), comprising the following steps:

i- from a digital mock-up of the building (BIM, CIM),

- calculation means (M) connected to the control server (S) automatically calculate nodes, the nodes being distributed between dispatcher nodes (Nd); and passage nodes (N), the passage nodes (N) being points of a path to be taken by the users to move towards one or various given target places ("E", "S", "W"), the passage nodes (N) each being associated with a dispatcher node (Nd) ;
- the calculation means automatically calculate edges (A), each edge connecting two successive nodes (N, Nd) by passing through the spaces without encountering obstacles;
- the calculation means (M) connected to the control server (S) assign, to each passage node, an updated waiting list of users; from the user profiles, each user profile determining nodes and edges, specific to each profile, through which the users can move;
- the calculation means (M) automatically calculate, taking into account the obstacles, a directed acyclic graph (DAG) of movement towards the target place(s), constituted with the nodes (N, Nd) and the edges (A),

ii- sensors (C) automatically, semi-automatically or manually detect an event and its real location in the building, which is stored on the control server (S);
iii- the calculation means (M) calculate the actual position of each user located in the building, with for closed spaces, the measurement of the power of the reception signal of a given connected object of the user, carried out by a wireless communication link to the communication access terminal(s) (B) in communication link with the control server (S), the communication terminal(s) (B) having a position identified in the digital mock-up (BIM, CIM);
iv- depending on the nature of the event, which results in the inaccessibility of certain nodes (N, Nd) of the directed acyclic graph (DAG), the calculation means (M) calculate a directed acyclic graph called 'updated' directed acyclic graph (DAG') of movement towards the target place(s) ("E", "S", "W");
v- the calculation means (M) transpose the actual positions of the users into the digital mock-up and calculate the dispatcher node (Nd) associated with each user and located closest to the user;
vi- from the updated directed acyclic graph (DAG') and the dispatcher node (Nd) associated with each user, the calculation means (M) calculate an associated subgraph (DODAG') per user which corresponds to the personalized path to each user to a given target place ("E", "S", "W"),

the associated subgraph (DODAG') per user being calculated using:

- an "individual objective function" for each dispatcher node (Nd), based on the user profile, constructed to:

• allocate to each user, and update all passage nodes (N) thereof associated with the dispatcher node (Nd), in the vicinity of which each user is located,
• constitute and update waiting lists of each passage node (N) associated with the dispatcher node (Nd), for the user,
• constitute and update waiting lists of each passage node (N) for the user in the entire building, allowing obtaining one or more associated subgraphs (DODAG') per user,

- a "general objective function" constructed from the "individual objective functions" of all users,

which has as input the waiting lists of all of each passage node (N) of the entire building of all users, and as output the associated subgraphs (DODAG') of all users,

the "general objective function" delivering to each user the subgraph (DODAG') thereof which is calculated to optimize all "individual objective functions" of all users, relative to input parameters,
and the calculation means (M) repeat the preceding steps ii to vi, to spatially and temporally update the guiding of each user,
at a given time frequency adapted to the event,

vii- the calculation means (M) guide each user via his connected object (T) or via connected objects (T') of the building, to follow the associated subgraph (DODAG') thereof, towards a given target place ("E", "S", "W").

2. The method according to the preceding claim, wherein the obstacles include partitions and walls but also objects or other obstructions to the passages of the users, and/or appear during events.

3. The method according to one of the preceding claims, wherein the optimization of the "general objective function" is carried out with one of the following strategies:

   - linear;
   - MRHOF;
   - ETXOF;
   - min max strategy;
   - fuzzy logic.

4. The method according to one of claims 1 to 3, wherein the user profiles include the following information, in order to calculate the personalized DODAG':

   - mobility category: such as a person with Reduced Mobility, child;
   - the age of the user;
   - presence of other specific users;
   - differentiated profiles.

5. The method according to the preceding claim 4, wherein the input parameters are a travel time and/or distance of the users towards the target place(s) ("E", "S", "W").

6. The method according to one of the preceding claims, wherein the event is an emergency and the method makes it possible to evacuate users to the target place ("E", "S", "W") which are exits from the building or fallback areas and shelters.

7. The method according to one of the preceding claims, wherein the event is called normal event and the method allows routing the users towards the target places ("E", "S", "W").

8. The method according to one of the preceding claims, wherein in step ii, the calculation means (M) determine the nature of the event and its actual location in the building:

   a) automatically by algorithms and/or
   b) manually by entering user information which is sent to the control server (S), in order to determine, in the directed acyclic graph (DAG), the nodes (N) closest to the event.

9. The method according to one of the preceding claims, wherein the building has several stages, and in step vi the calculation means (M) calculate, from each passage node (N), a subgraph DODAG' in all the stages connected to each other via the inter-stage passage nodes (N) to constitute the global DAG to treat any position in the building.

10. The method according to one of the preceding claims, wherein in step ii, in a learning step, the calculation means (M) collect the power of the reception signal from the connected object located at known positions in the building depending on wireless communication terminals (B), and exploit the relationship power of the reception signal and position in the building to locate the user.

11. The method according to one of the preceding claims, wherein the personalized interfaces/signals of step vii are:

   - images on screen,

- by virtual and augmented reality, and/or
- sound indication, directional vibrations on bracelets or walking sticks, guiding by agent or light signals, drones.

12. The method according to one of the preceding claims, wherein the personalized interfaces/signals of step vii are produced on the connected objects (T) on board each user which are intended for individualized localization and individualized guiding of each user.

13. A device for locating users and guiding user movements in a building which has spaces delimited by obstacles to user movements,
said guiding being carried out depending on an event in the building, following paths leading to one or more given target places ("E", "S", "W"), the guiding being adapted to each user, who has:

- a remote resource server which is a control server (S) accessible via a communications network;
- sensors (C) connected to the control server (S) to detect an event, and its real location in the building, which are stored on the control server (S);
- at least one communication terminal (B) in communication link with the control server (S),
- connected objects (T) of the users, in wireless communication link with the control server (S) via the communication terminal(s) (B),
- calculation means (M) connected to the control server (S) which are configured to:

i- from a digital mock-up of the building (BIM, CIM),

- calculate nodes (N) being distributed between: dispatcher nodes ($N_d$); and passage nodes, the passage nodes being points on the path to be taken by the users to move towards the various given target place(s) ("E", "S", "W") while avoiding obstacles;
- calculate edges (A), each edge connecting two successive nodes (N) by passing through the spaces without encountering the obstacles
- assign, to each passage node, a waiting list of users, from user profiles, each user profile determining nodes and edges through which the users can move;
- automatically calculate a directed acyclic graph (DAG) of movement towards the target places, constituted with the nodes (N, Nd) and the edges (A), and specific to each user profile,

ii+iii- calculate the actual position of each user located in the building, with, for the closed spaces, a measurement of the power of the reception signal from the user's given connected object, carried out by a wireless communication link to one or more communication access terminals (B), the access terminal(s) (B) having a position which is identified in the digital mock-up of the building (BIM, CIM);
iv- calculate the directed acyclic graph called 'updated' directed acyclic graph (DAG') of movement towards the target places depending on a nature of the event which results in the inaccessibility of certain nodes of the directed acyclic graph (DAG);
v- transpose the actual positions of the users into the digital mock-up and calculate the dispatcher node ($N_d$) associated with each user and located closest to the user;
vi- calculate for each user an associated subgraph (DODAG') which corresponds to a personalized path to each user towards a given target place ("E", "S", "W"), from the updated directed acyclic graph, and the dispatcher node (Nd) associated with each user,

the subgraph (DODAG') which corresponds to the personalized path to each user towards a given target place ("E", "S", "W"), being calculated using:

- an "individual objective function" for each dispatcher node (Nd), based on the user profile, constructed to:

• allocate to each user, and update all passage nodes thereof associated with the dispatcher node (Nd), in the vicinity of which each user is located,
• constitute and update, for the user, waiting lists of each passage node (N) associated with the dispatcher node (Nd),
• constitute and update waiting lists of each passage node (N) for the user in the entire building,

- a "general objective function" constructed from the "individual objective functions" of all users,

which has as input the waiting lists of all of each passage node (N) of the entire building, and as output the subgraphs (DODAG') of all users,

the "general objective function" delivering to each user the subgraph (DODAG') thereof which is calculated to optimize all "individual objective functions" of all users;

vii- repeat the preceding steps ii to vi, in order to spatially and temporally update the guiding, at a given time frequency adapted to the event, the connected objects (T) of the users or connected objects (T') located in the building, guiding each user to follow the associated subgraph (DODAG') thereof, towards a given target place ("E", "S", "W") .

14. A device (D) according to claim 13, wherein:

- the dispatcher nodes ($N_d$) are centroid points in a space comprising a room, hall, corridor;
- the passage nodes (N) are doors, elevator entrances and exits, high and low points of ramps or stairs (or escalators, treadmills or mobile cabins, etc.).

15. The device (D) according to one of claims 13 or 14, wherein the connected objects (T, T') are selected from the following list:

- Smartphone,
- Connected walking stick,
- Connected wheelchair,
- Tablet,
- Connected screen,
- Connected glasses,
- Connected bracelet,
- Connected light sensor,
- Communication devices for security/evacuation officers,
- Connected robot,
- Connected drone.

16. The device (D) according to one of claims 13 to 15, wherein the wireless communication terminals (B) are fixed and/or mobile, and are WiFi communication terminals (B).

FIG. 1

**Maquette numérique**

**Générateur graphe d'évacuation (DAG)**

**Graphe d'évacuation (DAG)**

**Calcul du DODAG chemin optimal ou adapté et personnalisé**

**Calcul de la position des utilisateurs dans le bâtiment « Localisation Indoor »**

FIG. 2

EP 4 042 395 B1

FIG. 3

EP 4 042 395 B1

DOGAG extrait à partir de la fonction objectif 1

DOGAG extrait à partir de la fonction objectif 2

Ce noeud appartient à deux DODAG différent 1 et 2

FIG. 4

EP 4 042 395 B1

FIG. 5a

FIG. 5b

EP 4 042 395 B1

FIG. 6

FIG. 7a

FIG. 7b

FIG. 7c

FIG. 7d

FIG. 8

FIG. 9

EP 4 042 395 B1

FIG. 10

FIG. 11

FIG. 12

FIG. 13

FIG. 14

FIG. 15

EP 4 042 395 B1

FIG. 16

FIG. 17

FIG. 18a

EP 4 042 395 B1

FIG. 18b

FIG. 19a

FIG. 19b

FIG. 19c

FIG. 20

FIG. 21

FIG. 22

FIG. 23

FIG. 24

FIG. 25

FIG. 26

Etape=1

FIG. 27

Etape=13

FIG. 28

FIG. 29

Etape=1

FIG. 30

Etape=2

FIG. 31

FIG. 32

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 102011083023

- US 9898912 B

**Littérature non-brevet citée dans la description**

- **E. CETIN ; K. DIMITROPOULOS ; B. GOUVERNEUR ; N. GRAMMALIDIS ; O. GUNAY ; Y. H. HABIBOGLU ; B. U. TOREYIN ; S. VERSTOCKT.** Vidéo fire détection: a review. *Digital Signal Processing,* 2013, vol. 23 (6), 1827-1843
- **S. COSAR ; G. DONATIELLO ; V. BOGORNY ; C. GARATE ; L. ALVARES ; F. BREMOND.** Towards Abnormal Trajectory and Event Détection in Video Surveillance. *IEEE Transactions on Circuits and Systems for Video Technology,* 2016
- **J. FONOLLOSA ; A. SOLÓRZANO ; S. MARCO.** Chemical Sensor Systems and Associated Algorithms for Fire Détection: A Review. *Sensors,* 2018, vol. 18

- **C. JORGENSEN ; S. POWELL.** Solving 0-1 Minimax Problems. *The Journal of the Operational Research Society,* Juin 1987, vol. 38 (6), 515-522
- **OMPRAKASH GNAWALI ; PHILIP LEVIS.** The ETX Objective Function for RPL, draft-gnawali-roll-etx-of-00. *IETF,* 2010
- **OMPRAKASH GNAWALI ; PHILIP LEVIS.** The Minimum Rank with Hystérésis Objective Function. RFC 6719. 2012
- **H. WANG ; A. KLASER ; C. SCHMID ; C.-L. LIU.** Action récognition by dense trajectories,'' in Computer Vision and Pattern Recognition (CVPR). *2011 IEEE Conférence,* Juin 2011, 3169-3176